# EUROPEAN PATENT APPLICATION

(11) **EP 2 082 818 A1**
(43) Date of publication of application: **29.07.2009**
(21) Application number: 07830874.9
(22) Date of filing: 30.10.2007
(51) Int. Cl.: B21K 1/06, B21J 5/02, B21J 5/08, B21J 5/12, B21K 1/76, F16H 55/26

(54) **RACK AND PRODUCTION METHOD THEREOF**

(30) Priority: 02.11.2006 JP 2006299437; 18.05.2007 JP 2007132561; 25.06.2007 JP 2007166047
(71) Applicant: NSK Ltd., Tokyo 141-8560 (JP)
(72) Inventor: KOBAYASHI, Kazuto, Fujisawa-shi Kanagawa 251-0021 (JP); MIZUSHIMA, Yuki, Fujisawa-shi Kanagawa 251-0021 (JP); HIROTA, Kotaro, Fujisawa-shi Kanagawa 251-0021 (JP); TSUBOUCHI, Akira, Maebashi-shi Gunma 371-0853 (JP)
(74) Representative: Klingseisen, Franz
(86) International application number: PCT/JP2007/071140
(87) International publication number: WO 2008/053896

(57) **Abstract**

To sufficiently secure the width dimension, strength and rigidity of the rack teeth 10, and to realize the light weight construction and the manufacturing method of the rack 8, the rack teeth 10 is formed by plastic working on one side surface in the radial direction of part in the axial direction of a rod unit 9 having a circular cross-sectional shape, and the curvature radius of the portion which is separated in the radial direction from the portion where the rack teeth 10 is formed, is made greater than that of the cross sectional shape of the outer surface of the axial remaining portion of the rod unit 9. For this purpose, as shown in (A) to (B), while a portion in the circumferential direction of part in the axial direction of a material 13 is compressed, the remaining portion in the circumferential direction of this part in the axial direction is formed into a partial cylindrical surface 17 whose curvature radius is larger than that of the outer surface of the material 13, to form an intermediate material 20. Then, as shown in (C) to (D), the rack teeth 10 are formed on the circumferential portion of the axial part of the intermediate material 20. At last, as shown in (E) to (F), sizing is performed to obtain the rack 8.

## Description

### Field of the Invention

The present invention relates to the improvement of a manufacturing method for a rack that is installed in a rack and opinion steering apparatus as a steering apparatus for applying a steering angle to the steering wheels of an automobile, for example.

### Background Art

A rack and pinion steering apparatus, which uses a rack and pinion as a mechanism for converting rotational motion that is input from a steering wheel to linear motion for applying a steering angle, is widely used because it is made to be compact and lightweight, as well as has good rigidity and good feel of steering.

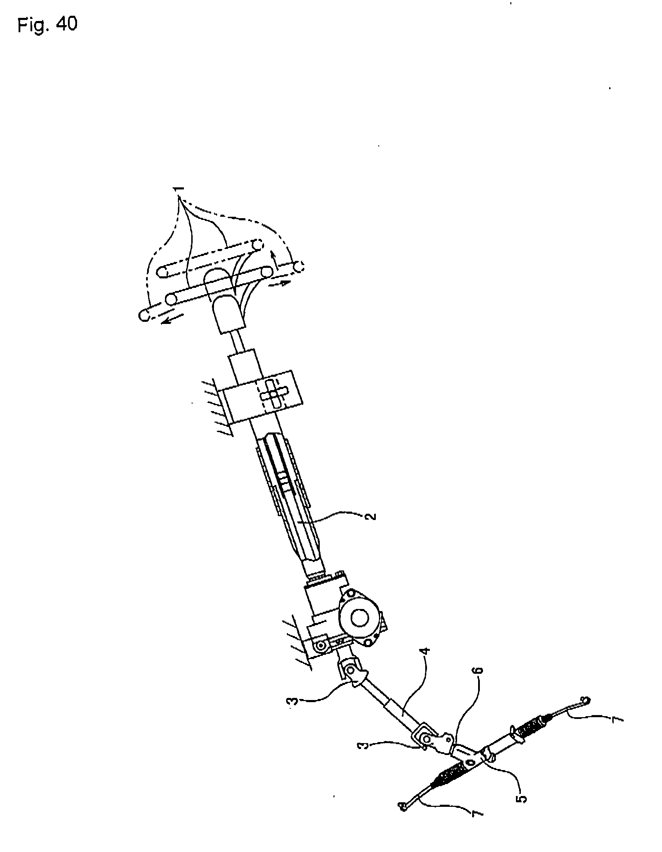

FIG. 40 shows an example of this kind of rack and pinion steering apparatus. In this steering apparatus, the movement of a steering shaft 2 that is turned by the operation of a steering wheel 1 is transmitted to the input shaft 6 of a steering-gear unit 5 by way of a universal joint 3 and intermediate shaft 4. This steering-gear unit 5 comprises a pinion that is rotated and driven by the input shaft 6, and a rack that meshes with the pinion. When the pinion rotates together with the input shaft 6, the rack displaces in the axial direction, and pushes and pulls a pair of tie rods 7 that are connected to both ends of the rack, which applies the desired steering angle to the steering wheels.

When the rack of the steering-gear unit 5 described above is made by cutting work in which the material is cut to form the rack teeth, not only does the production cost increase, but it is also difficult to maintain the strength and rigidity of the rack teeth. On the other hand, when the rack teeth are formed by plastic deformation of the material, it is possible to shorten the amount of time required for forming the teeth and reduce the production cost, and since the metallic structure of the obtained rack teeth becomes very dense, it is easy to maintain the strength and rigidity of the rack teeth. Inventions that relate to a rack and manufacturing method thereof in which the rack teeth are formed by plastic working are disclosed in patent documents 1 to 4.

Of these, in patent documents 1 and 2, inventions related to the manufacturing method of a rack are disclosed in which a circular rod shaped material is tightly held between a pair of dies, and an uneven shape that is formed on one of these dies is transferred around part of the outer surface of the material, forming the teeth. The excess material that is generated when forming the teeth (material that is extruded from the portions that become the concave portions of the teeth) is forced out from between the dies from the side of the main portion of the rack in the shape of burrs, and then later removed.

In the case of the conventional art that is disclosed in patent documents 1 and 2, the excess material is forced out from the side of the main portion of the rack, so the stress that occurs in the pair of dies that press the rack becomes high and it becomes difficult to maintain the life of the dies. Moreover, a process for removing the excess material that is forced out from the side of the main portion in the shape of burrs is required, making it impossible to avoid increasing the production cost. Furthermore, as was described above, in this process large stress is applied to both dies, and in order to thoroughly transfer the uneven shape that is formed on one of the dies to the material, plastic working that includes this transfer must be performed by hot forging or warm forging. In either hot forging or warm forging, thermal expansion occurs due to the rise in temperature of the dies during processing, and since it is difficult to accurately control the amount of this thermal expansion, it is difficult to sufficiently maintain the precision of the obtained rack teeth.

In order to solve the problems described above, in patent document 3, an invention related to the production of a rack is disclosed in which a concave portion is formed on the rear side of the portion of the circular rod shaped material where the rack teeth are to be formed, and the excess material that is generated when forming the rack teeth moves into this concave portion.

In the case of the conventional art such as is disclosed in patent document 3, instead of the problem that occurs when performing the conventional art disclosed in patent documents 1 and 2, a process for forming the concave portion is necessary, which makes the production work troublesome, and an increase in production cost cannot be avoided. Particularly, the concave portion described above is formed by swaging, turning or the like, so smoothly transitioning to the processing work for forming the rack that is to be performed next (performing the next forming process) becomes difficult. This causes the production cost to increase. Furthermore, the outer diameter of the portion separated in the axial direction from the portion where the rack teeth are formed and that does not require as much strength is the same as the diameter of the material that is required for forming the rack teeth and that does require strength, so the overall rack weight easily increases.

Furthermore, in patent document 4, an invention related to a manufacturing method of a rack is disclosed in which a hollow cylindrical material is pressed and expanded in the width direction and the rack teeth are formed in this expanded portion.

In the case of conventional art such as disclosed in patent document 4, it is easy for the thickness of the portion at the bottom of rack teeth to become small (thin) by the amount that the hollow cylindrical shaped material is pressed and expanded in order to increase the width dimension of the rack. Therefore, it is difficult to maintain sufficient strength of the portion of the rack where the rack teeth are formed.

As was explained above, by forming rack teeth by only performing plastic working on part in the axial direction of a circular rod shaped material, it is possible to reduce the production cost of the rack while at the same time maintain the strength and rigidity of the rack teeth. However, when only performing plastic working to form rack teeth in this way, it is necessary to control the desired cross sectional shape of the material by a method such as forming a concave portion as described above for the excess material to move into.

Moreover, as another reason for forming rack teeth in this way is that, from the aspect of the required shape after the rack is completed, it may be necessary to control the desired cross sectional shape of the material before performing plastic working in order to control the volume of metal material that is pressed out by the plastic working. In either case, performing any processing that is similar to the case of forming a concave portion as described above for controlling the desired cross sectional shape of the material, causes the production cost to increase and is not preferred.
Patent Document 1: Japanese Patent Application Publication No. H10-58081
Patent Document 2: Japanese Patent Application Publication No. 2001-79639
Patent Document 3; Japanese Patent No. 3442298
Patent Document 4: Japanese Patent Application Publication No. 2006-103644

### Disclosure of the Invention

### Problems to be Resolved by the Invention

In consideration of the problems described above, it is the object of the present invention to provide a rack that is lightweight and is capable of sufficiently maintaining the width dimension, strength and rigidity of the rack teeth, and to provide a manufacturing method thereof that is low cost.

### Means of Solving the Problems

The rack that is the object of the present invention comprises: a rod unit that is made of a metal material and has a circular cross section, and rack teeth that are formed by plastic working on one side surface in the radial direction of part of the rod unit in the axial direction of the rod unit.

Particularly, in the case of the rack of the present invention, of the outer surface of the part of the rod unit in the axial direction which is solid, the radius of curvature of the cross sectional shape of a portion that is separated in the circumferential direction from the portion where the rack teeth are formed is larger than the radius of curvature of the cross sectional shape of the outer surface of the remaining portion in the axial direction of the rod unit.

In the case of embodying the rack of this invention, of the rod unit, it is necessary that at least the portion where the rack teeth are formed be solid with no hollow space, however, this portion can be made as a single member or can be a combination of members.

For example, the rod unit can be made as a single member from the same kind of metal material over the entire length and from the outer surface to the center.

Alternatively, the rod unit could also comprise an outer layer member that is made into a tube shape from a first metal material, and an inner layer member that is made into a rod shape from a second metal material, and that is tightly fitted inside the outer layer member.

In a first aspect of a manufacturing method for producing the rack of the present invention, a first plastic working is performed on part in the axial direction of a circular rod shaped material that will become the rod unit, by compressing a portion in the circumferential direction of the part in the axial direction, and forming a partial cylindrical surface on the remaining portion in the circumferential direction of the part in the axial direction such that it has a radius of curvature that is larger than the radius of curvature of the outer surface of the material to obtain an intermediate material.

Moreover, a second plastic working is performed to form rack teeth on the portion in the circumferential direction of the part in the axial direction of the intermediate material.

In the case of embodying the invention related to this manufacturing method, it is preferred that the first plastic working be an upsetting work. In the upsetting work, by compressing the part in the axial direction of the material in the radial direction to make the portion of the outer surface of the part in the axial direction where the rack teeth will be formed into a flat surface portion, the remaining portion that is separated from this flat surface portion is formed into a partial cylindrical surface whose radius of curvature of the cross sectional shape is larger than the radius of curvature of the cross sectional shape of the outer surface of the material.

In this case, it is preferred that the second plastic working be a pressing work. Moreover, in this pressing work, the remaining portion that is separated from the flat surface portion of the part in the axial direction of the intermediate material is supported by a retaining hole of a die, and rack teeth are formed on the flat surface portion by pressing a teeth-formation punch, having an uneven shape corresponding to the teeth to be formed, against the flat surface portion.

It is further preferred that the space between the inner surfaces of the retaining hole in the die be less than the outer diameter of the intermediate material in the width direction of the flat surface portion. In addition, the teeth-formation punch presses this intermediate material into the retaining hole, and forms rack teeth on the flat surface while moving metal material of both ends in the width direction of this intermediate material to the flat surface portion.

In the case of embodying the invention related to this manufacturing method, it is preferred that the second plastic working be divided into a plurality of steps. First, a teeth-formation punch, having a shape that corresponds to the pressure angle that is less than the pressure angle of the rack teeth to be obtained, forms crude rack teeth. After that, a teeth-finishing punch, having a shape that corresponds to the pressure angle of the rack teeth to be obtained, presses the crude rack teeth to form the crude rack teeth into the rack teeth.

It is further preferred that after the crude rack teeth have been formed, plastic working be performed to increase the radius of curvature of the cross sectional shape of at least the edges from the base of the teeth to the tip of the teeth of both ends in the width direction of the crude rack teeth. After that, the teeth-finishing punch presses the crude rack teeth to form the crude rack teeth into the rack teeth.

In this case, it is further preferred that the plastic working make the radius of curvature of the cross sectional shape of the edges from the base of the teeth to the tip of the teeth of both ends in the width direction of the crude rack teeth larger than the radius of curvature of the cross sectional shape of the edges from the base of the teeth to the tip of the teeth of both ends in the width direction of the completed rack teeth.

In the initial stage or first half of the second plastic working, the crude rack teeth are formed, and a pair of flat flank surfaces is formed on both sides of the crude rack teeth. After that, with these flat flank surfaces located between a pair of dies, plastic working is performed to increase the radius of curvature of the cross sectional shape of the base portion of the crude rack teeth. The metal material that is moved by this plastic working is stopped by the flat flank surfaces, and the excess material is prevented from protruding outward in the radial direction further than a virtual cylindrical surface that extends from the partial cylindrical surface.

In addition, after the second plastic working, sizing is performed to adjust the shape of the rack teeth.

It is further preferred that the second plastic working form the rack teeth, and form a pair of flat flank surfaces on both sides of the rack teeth. After that, sizing is performed to improve the precision of the rack teeth, where the metal material that is moved by this sizing is stopped by the flat flank surfaces, and the excess material is prevented from protruding outward in the radial direction further than a virtual cylindrical surface that extends from the partial cylindrical surface.

Moreover, an ironing work in which the material is passed through an ironing die so as to reduce the outer diameter of the material except for part in the axial direction thereof is performed before the first plastic working. The result is taken to be a preliminary intermediate material of which the outer diameter of the part in the axial direction of this material is larger than the outer diameter of the remaining portion in the axial direction, after which the first plastic working is performed on this preliminary intermediate material.

Alternatively, an ironing work in which the intermediate material is passed through an ironing die so as to reduce the outer diameter of this intermediate material except for part in the axial direction thereof is performed after performing the first plastic working and before performing the second plastic working. The result is taken to be a second intermediate material of which the outer diameter of this part in the axial direction is larger than the outer diameter of the remaining portion in the axial direction, after which the second plastic working is performed on this second intermediate material.

On the other hand, in a second embodiment of a manufacturing method for producing the rack of the present invention, an ironing work in which a circular rod shaped material that will become the rod unit is passed through an ironing die so as to reduce the outer diameter (or reduce to a desired cross sectional shape) of at least a portion in the axial direction of this material. This ironing work is performed at least either: before performing a first plastic working in which a flat surface portion where the rack teeth will be formed (this not only includes a completely flat surface, but also includes a surface that could be considered in the same way as a flat surface, such as a curved surface having a large radius of curvature, or the like, or in other words, includes a surface that could be necessary in the previous stage when forming the rack teeth by the plastic working) on part in the axial direction of the material by compressing a portion in the circumferential direction of this part in the axial direction; or after performing this first plastic working and before performing a second plastic working of forming the rack teeth on the flat surface portion.

More specifically, this ironing work can be performed as described below.

For example, the ironing work can be performed before performing the first plastic working, to reduce the outer diameter (or reduce to a desired cross sectional shape) of the entire material in the axial direction.

Moreover, the ironing work can be performed in at least the stage before performing the first plastic working, or after performing the first plastic working and before performing the second plastic working, to reduce the outer diameter (or reduce to a desired cross sectional shape) of a portion in the axial direction of the material nearer the base end side than a portion corresponding to where the rack teeth will be formed.

The ironing work can be performed before performing the first plastic working, to reduce the outer diameter of at least a portion corresponding to where the rack teeth will be formed of the part in the axial direction of the material (as necessary, this portion and a portion nearer the tip end side than this portion).

Furthermore, the ironing work can be performed before performing the first plastic working, to reduce the outer diameter (or reduce to a desired cross sectional shape) of a portion of the part in the axial direction of this material except for the portion nearer to the tip end side than the portion corresponding to where the rack teeth will be formed.

In addition to being performed separately, it is possible to combine and perform the necessary ironing works from among these processes.

For example, after performing a first ironing work to reduce the outer diameter (or reduce to a desired cross sectional shape) of the entire material in the axial direction, it is also possible to perform a second ironing work to reduce the outer diameter (or reduce to a desired cross sectional shape) of a portion corresponding to where the rack teeth will be formed of part in the axial direction of this material, and a portion nearer to the tip end side than that portion.

Moreover, before performing the first plastic working, it is possible to perform a first ironing work to reduce the outer diameter (or reduce to a desired cross sectional shape) of a portion nearer to the base end side than the portion corresponding to where the rack teeth will be formed of part in the axial direction of the material (and as necessary this portion and a portion nearer the tip end side than this portion), and then perform a second ironing work. These first and portion ironing works can be performed in reverse order.

In addition to these, it is also possible to suitably combine these ironing works in order that the necessary outer diameter (or cross sectional shape) is obtained.

### Advantageous Effect of the Invention

With the rack and rack manufacturing method of the present invention described above, it is possible to sufficiently secure the width dimension, strength and rigidity of the rack teeth, as well as it is possible to obtain a lightweight rack at low cost without increasing more than necessary the outer diameter of the portion where the rack teeth are not formed.

First, securing the width dimension of the rack teeth is accomplished by making the width of a portion where the rack teeth will be formed of part in the axial direction of the rod unit greater than the outer diameter of the remaining portion in the axial direction of the rod unit. Also, securing the strength and rigidity can be accomplished by making this rod unit from a solid material. In other words, the width dimension of the portion where the rack teeth will be formed of part in the axial direction of the rod unit is expanded while pressing to compress the material, and the radius of curvature of the portion that is separated in the circumferential direction from the portion where the rack teeth will be formed is made to be greater than the radius of curvature of the outer surface of the material. Therefore, it is possible to form rack teeth having a width dimension that is large in comparison with the outer diameter of the material. The portion where these rack teeth are formed differs from the rack teeth that are formed by pressing and expanding a hollow cylindrical tube shaped material as done in the conventional art disclosed in patent document 4 described above in that it is possible to secure sufficient thickness. It is possible to improve the strength and rigidity of the rack teeth portion by the amount that the width dimension is increased, and even further by the amount that the radius of curvature of the cross sectional shape of the portion that is separated in the circumferential direction from the portion where the rack teeth are formed is increased.

Moreover, obtaining a lightweight rack without increasing more than necessary the outer diameter of the portion where the teeth are not formed is accomplished by making the outer diameter of the remaining portion in the axial direction of the rod unit small even though the width dimension of the rack teeth is secured.

Furthermore, making a rack at low cost (keeping the production costs low) is accomplished by performing simple pre processing when forming the rack teeth by plastic working that prevents excess material from protruding outward in the radial direction and becoming burrs, which together with keeping the processing load to a minimum and making post processing to remove the excess material unnecessary. In other words, the width dimension of the portion of part in the axial direction of the rod unit where the rack teeth are to be formed is made to be greater than the outer diameter of the remaining portion in the axial direction by compressing the portion of the cross sectional shape that originally had the same cross sectional area as the remaining portion in the axial direction, and making the portion where the rack teeth are to be formed flat. In the state before the rack teeth are formed, the cross sectional area of part in the axial direction of the rod unit is nearly equal to the cross sectional area of the remaining portion in the axial direction. Therefore, the volume of the material that exists in the part in the axial direction of the rod unit where the rack teeth are to be formed is kept to a proper amount, and the excess material resulting from formation of the rack teeth does not protrude outward in the radial direction. The movement of metal material that occurs during a second plastic working for forming the rack teeth is mainly movement from the bottom portion of the rack teeth to the tip portion of the teeth. Therefore, it is possible to keep the processing load for forming the rack teeth low, and it is possible to form the rack teeth by cold working, in which it is easier to secure precision when compared with hot or warm working.

By using layered construction for the rod unit having an outer layer member and inner layer member, it becomes possible to further secure the strength of the rack teeth and reduce the weight of the overall rack. For example, by making the outer layer member from a metal material for which it is easy to secure strength and resistance to wear such as a steel alloy like carbon steel or stainless steel, and by making the inner layer member from a lightweight metal material that can be plastically deformed such as an aluminum alloy, it is possible to maintain strength as well as obtain a lightweight rack. The thickness of the outer layer member is made to be as small (thin) as possible and still be able to secure the strength and resistance to wear of the rack teeth and overall rack. In addition, it is possible to increase the ratio of the inner layer member by the amount that the outer layer member can be made thin, and thus it is possible to further reduce the overall weight of the rack.

Moreover, in the case of the manufacturing method of the present invention, all of the process can be performed in a state in which the inside of the dies are not completely filled with the metal material. In other words, all of the processes can be performed without so-called sealed formation, and the reaction force applied to the dies from the processed object in each process, and furthermore the stress that occurs in each of the dies due to that force is kept low, and thus it is possible to improve the durability of these dies, which also makes it possible to reduce costs. Also, the construction of the dies can be simple, so that formation is possible using general-purpose press equipment. The stress occurring in the dies is kept low, so formation using cold forging is possible, and since change in the dimensions of the dies is suppressed, it is possible to improve the precision of the obtained rack more than when formed using hot or warm forging. Particularly, by performing the process of forming the rack teeth using a pressing process in which the remaining portion in the circumferential direction of the part in the axial direction of the aforementioned intermediate material that is separated from the aforementioned flat surface is supported in a retaining hole, and a teeth-formation punch is pressed against the flat surface, further by moving the metal material from both end portions in the width direction of the intermediate material during pressing to the flat surface, or by performing this process in a plurality of steps, the rack can be made at sufficiently low cost and good precision.

Furthermore, by adjusting the shape of the rack teeth by sizing or multi-step formation, it is possible to form the rack teeth with high precision. Of these, in the case of performing multi-step formation, by plastically deforming the edges from the base of the teeth to the tip of the teeth on both ends in the width direction of the crude rack teeth during the process of forming the crude rack teeth into rack teeth, it is possible to further improve the shape precision of the obtained rack teeth, as well as reduce the process load required for each process. Also, in the case of performing multi-step formation or sizing, by stopping the metal material that moves due to the multi-step formation or sizing by a pair of flat flank surfaces, it is possible to perform the multi-step formation or sizing without sealed formation. In addition, it is possible to keep the stress that occurs in the dies due to the multi-step formation or sizing low, and thus it is possible to improve the durability of the dies.

By performing an ironing work and/or diameter expansion process on the material or intermediate material before performing the plastic working for forming the rack teeth, it is possible to reduce the diameter of the portion that is separated in the axial direction from the portion where the rack teeth are formed, and reduce the overall weight of the rack, as well as it is possible to regulate the outer diameter (cross sectional shape) of the material that takes into consideration the volume of the metal material that is extruded by plastic working in relationship to the shape required for the completed rack. Differing from a cutting process such as swaging or turning which is required in the case of the conventional art disclosed in patent document 3 described above, the ironing work and diameter expansion process, which are a kind of plastic working, can segue into the other plastic working for forming the rack teeth or the like. Therefore, it is possible to suppress somewhat the rise in production cost of the rack that accompanies performing an ironing work or diameter expansion process.

### Brief Description of the Drawings

FIG. 1 is a pictorial view of a rack of a first embodiment of the present invention.
FIG. 2 is a view as seen from direction A in FIG. 1.
FIG. 3 is a view as seen from direction B in FIG. 1.
FIG. 4 is an enlarged cross sectional view of the portion C-C in FIG. 3.
FIG. 5 is a drawing of partial cross sectional views as shown from the same direction as FIG. 4, and show the order of processing of the manufacturing method of the first embodiment.
FIG. 6 is a drawing of partial pictorial view showing the shape of the rack teeth before and after sizing.
FIG. 7 is a drawing that corresponds to the portion D-D shown in (D) of FIG. 5, and shows the change in shape when the processing of the rack teeth is divided into two steps.
FIG. 8 is a drawing of enlarged cross sectional views showing the changes in shape of teeth between (B) and (C) of FIG. 7.
FIG. 9 is a drawing of partial cross sectional views of when sizing is divided into two steps.
FIG. 10 is similar to FIG. 5 and shows a second embodiment of the present invention.
FIG. 11 is a drawing of cross sectional views showing the changes in shape of an intermediate material between (C) and (D) of FIG. 10.
FIG. 12 is a drawing of partial cross sectional views showing the order of processing of a third embodiment of the present invention.
FIG. 13 is a drawing of partial cross sectional views showing the order of processing of a fourth embodiment of the present invention.
FIG. 14 is a pictorial view of a rack of a fifth embodiment of the present invention.
FIG. 15 is a view as seen from direction E in FIG. 14.
FIG. 16 is a view as seen from direction F in FIG. 14.
FIG. 17 is an enlarged cross sectional view of the portion G-G in FIG. 16.
FIG. 18 is a drawing of partial cross sectional views from the same direction as FIG. 17, and shows the order of processing of the manufacturing method of the fifth embodiment.
FIG. 19 is a drawing of partial cross sectional views as seen from the same direction as FIG. 4, and shows the order of processing from a first plastic working to the initial step of a second plastic working in a sixth embodiment of the present invention.
FIG. 20 is similarly a drawing of partial cross sectional views as seen from the same direction as FIG. 4, and shows the order of processing of a plastic working of enlarging the radius of curvature of the cross sectional shape from the base of the teeth to the tip of the teeth on both ends in the width direction of the crude rack teeth when performing the initial step of the second plastic working.
FIG. 21 is similarly a drawing of partial cross sectional views as seen from the same direction as FIG. 4, and shows a first example of the order of processing of plastic working for adjusting the shape of the crude rack teeth and forming the rack teeth when performing the final step of the second plastic working.
FIG. 22 is similarly a drawing of partial cross sectional views as seen from the same direction as FIG. 4, and shows a second example of the order of processing of the aforementioned plastic working.
FIG. 23 is a drawing of partial pictorial views of the shape from the crude rack teeth to the rack teeth as processing progresses, where (A) is the crude rack teeth after the initial step of the second plastic working, (B) is the state after plastic working is performed to enlarge the radius of curvature of the cross sectional shape of the edges on both ends in the width direction of the crude rack teeth, and (C) is the rack teeth after sizing.
FIG. 24 is a drawing of partial cross sectional views as seen from the same direction as FIG. 4, and shows two sizing conditions of the sixth embodiment.
FIG. 25 is a drawing of partial cross sectional views as seen from the same direction as FIG. 4, and shows the order of processing from a first plastic working to the initial step of a second plastic working in a seventh embodiment of the present invention.
FIG. 26 is similarly a drawing of cross sectional views as seen from the same direction as FIG. 4, and shows the order of processing of a plastic working of enlarging the radius of curvature of the cross sectional shape of the edges on both ends in the width direction of the crude rack teeth when performing the initial step of the second plastic working.
FIG. 27 is similarly a drawing of partial cross sectional views as seen from the same direction as FIG. 4, and shows a first example of the order of processing of a plastic working for adjusting the shape of the crude rack teeth and forming the rack teeth when performing the final step of the second plastic working.
FIG. 28 is a drawing of partial cross sectional views as seen from the same direction as FIG. 4, and shows a second example of the order of processing during the aforementioned plastic working.
FIG. 29 is a drawing of partial cross sectional views as seen from the same direction as FIG. 4, and shows two sizing conditions of the seventh embodiment.
FIG. 30 is a pictorial view of a rack that was made using the manufacturing method of an eighth embodiment of the present invention.
FIG. 31 is a drawing of partial cross sectional side views showing the order of processing of the manufacturing method of the eighth embodiment of the present invention.
FIG. 32 is a drawing of partial cross sectional views as seen from the H direction of FIG. 30, and shows the order of the subsequent processing.
FIG. 33 is a drawing of partial pictorial views showing the shape of the rack teeth before and after sizing.
FIG. 34 is a drawing similar to FIG. 31, and shows a ninth embodiment of the present invention.
FIG. 35 is a drawing similar to FIG. 31, and shows a tenth embodiment of the present invention.
FIG. 36 is a drawing similar to FIG. 31, and shows an eleventh embodiment of the present invention.
FIG. 37 is a drawing similar to FIG. 31, and shows a twelfth embodiment of the present invention.
FIG. 38 is a drawing similar to FIG. 31, and shows a thirteenth embodiment of the present invention.
FIG. 39 is a partial cross sectional drawing from the same direction as

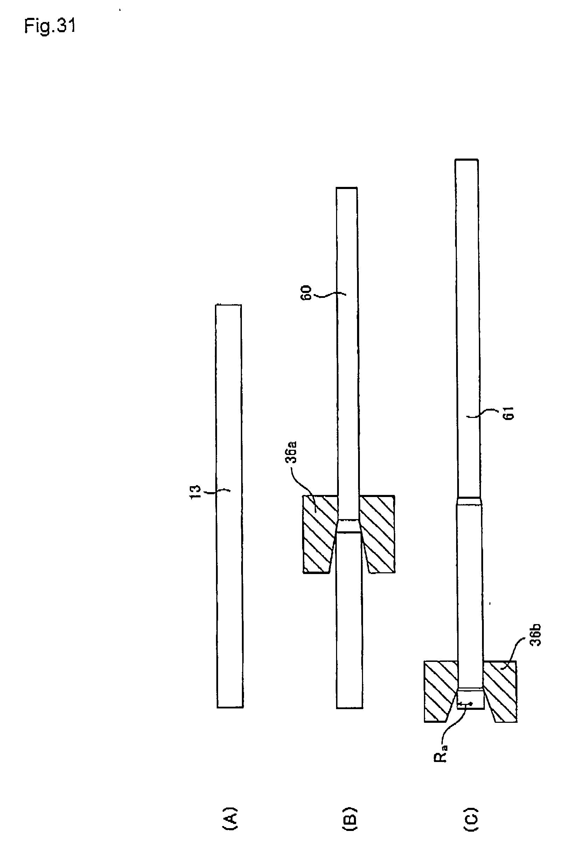

FIG. 31, and shows a fourteenth embodiment of the present invention.
FIG. 40 is a side view showing an example of a steering apparatus for an automobile that comprises a steering gear provided with a rack which is an object of the present invention.

### Explanation of Reference Codes

1 Steering wheel
2 Steering shaft
3 Universal joint
4 Intermediate shaft
5 Steering gear
6 Input shaft
7 Tie rod
8, 8a, 8b, 8c, 8d, 8e Rack
9, 9a, 9b, 9c, 9d, 9e Rod unit
10 Rack teeth
11 Rear Portion
12 Circular rod portion
13, 13a Material
14 Receiving die
15 Concave groove portion
16 Pressure punch
17, 17a, 17b Partial cylindrical surface portion
18 Flat surface portion
19 Curved surface portion
20, 20a Intermediate material
21, 21a, 21b, 21c Die
22, 22a, 22b, 22c Retaining hole (concave formation groove)
23, 23a, 23b Bottom portion
24 Inner surface
24a Flat formation surface
25 Inclined guide surface
26, 26a Teeth-formation punch
27, 27a, 27b, 27c Crude rack
28 Flat flank surface
29, 29a, 29b Sizing die
30 Uneven sizing surface
31, 31a, 31b Pressing die
32 Concave pressing groove
33 Uneven receiving portion
34 Receiving die
35 Pressing die
36, 36a, 36b, 36c Ironing die
37 Preliminary intermediate material
38 Second intermediate material
39 Outer layer member
40 Inner layer member
41, 41a Flat guide surface
42 Flat flank surface
43 Crude rack teeth
44, 44a Flat formation surface
45 Second flat formation surface
46 Pressing die
47 Receiving die
48 Curved surface
49 Second intermediate material
50 Restraining surface
60, 60a, 60b, 60c First intermediate material
61, 61a Second intermediate material
62 Third intermediate material
63 Preliminary material
64 Diameter expansion punch
65 Diameter expansion die
66 Concave hole

### Description of the Preferred Embodiments

### [First Embodiment]

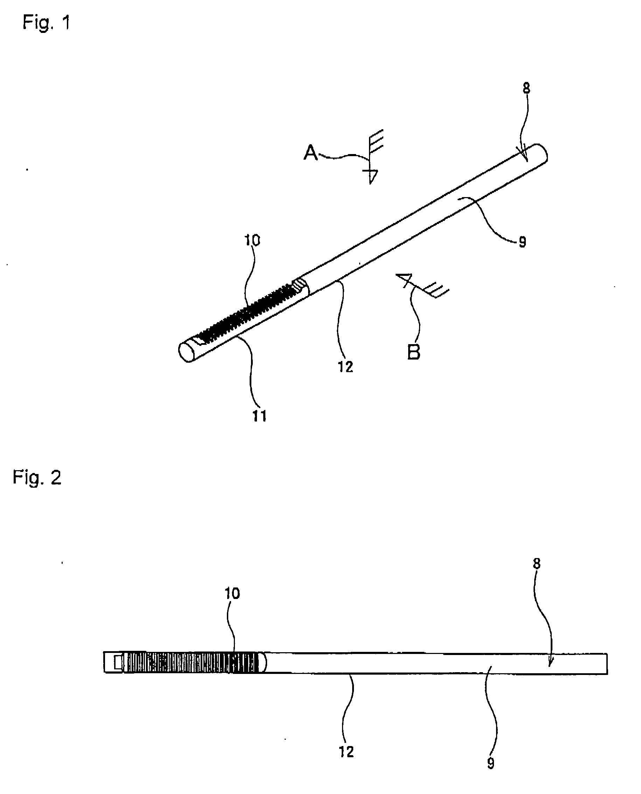

FIGS. 1 to 8 show a first embodiment of the present invention. First, the construction of the rack 8 of this embodiment will be explained based on FIGS. 1 to 4. In the explanation below, the radius of curvature of each surface, unless specified otherwise, is taken to be the radius of curvature of the cross sectional shape of each surface.

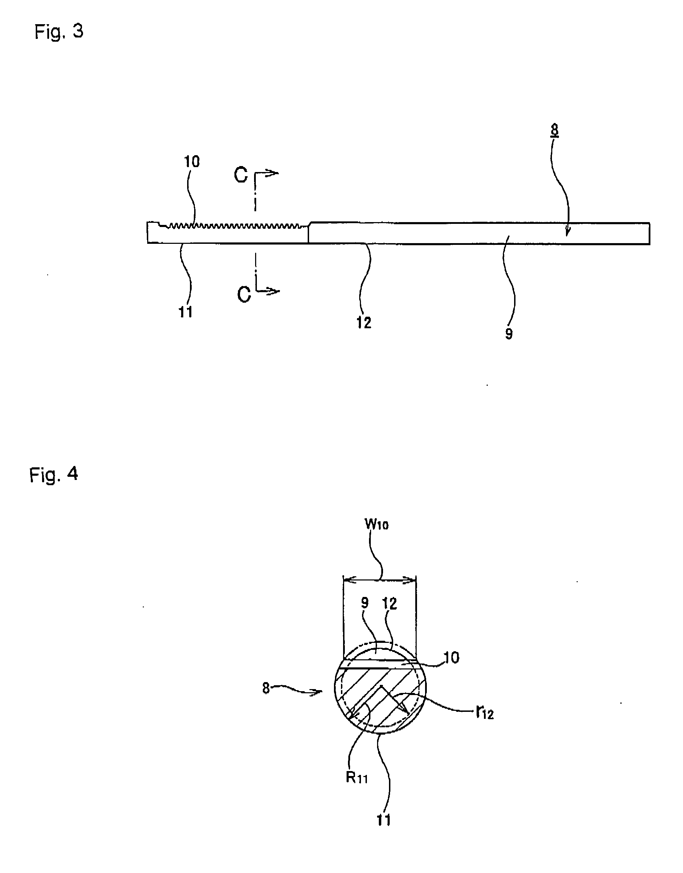

The rack 8 is made of a metal material such as carbon steel, stainless steel or the like, and comprises a rod unit 9 that is a solid material having a circular cross section, and rack teeth 10 that are formed by plastic working on one side surface in the radial direction of part in the axial direction (left part in FIG. 1 to 3) of the rod unit 9. In this embodiment, the rod unit 9 is made from a single metal material that is the same over the entire length from the outer surface to the center. Moreover, in the part in the axial direction of this rod unit 9, the radius of curvature R₁₁ (see FIG. 4) of the cross sectional shape of the rear portion 11 that is separated in the circumferential direction from the portion where the rack teeth 10 are formed is greater than the radius of curvature r₁₂ of the outer surface of the circular rod portion 12, which is the remaining part in the axial direction of the rod unit 9 (R₁₁ > r₁₂). Of these, the radius of curvature r₁₂ of the outer surface of the circular rod portion 12 coincides with the radius of curvature of the outer surface of the original material. Therefore, the radius of curvature R₁₁ of the rear portion 11 is greater than the radius of curvature of the outer surface of this material. In addition, the width dimension W₁₀ of the rack teeth 10 is greater by that amount (when compared with the case when the rack teeth are simply formed on the outer surface of the material).

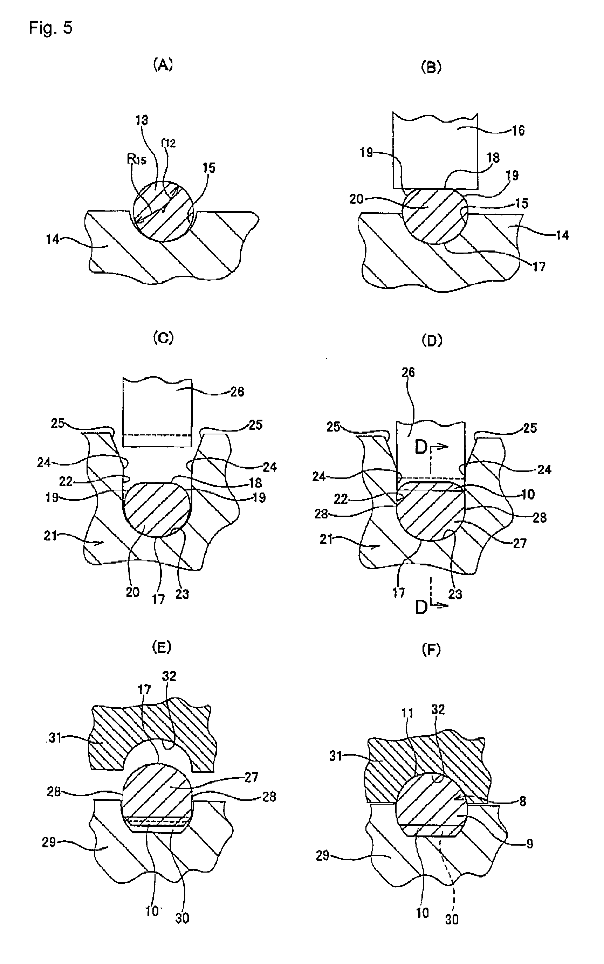

Next, the manufacturing method of the rack 8 described above will be explained based on FIGS. 5 to 8.

First, as shown in (A) of FIG. 5, a circular rod shaped material 13, which is a metal material such as carbon steel, stainless steel or the like, is set (placed) inside a concave groove portion 15 that is formed on the top surface of a receiving die 14 and has a circular arc shaped cross section. The radius of curvature R₁₅ of the inner surface of this concave groove portion 15 is nearly the same as the radius of curvature of R₁₁ of the rear portion 11 (see FIG. 4) (except for the amount of springback that results after the processing force has been released) (R₁₅ ≈ R₁₁).

Next, as shown in (B) of FIG. 5, the material 13 is forcefully pressed toward the concave groove portion 15 by the tip end (bottom end surface) of a pressure punch 16 which is long in the direction along the concave groove portion 15, to perform upsetting work. The shape of the pressure punch 16 is typically a flat surface. However, in regards to the width direction (left and right directions in FIG. 5) of the concave groove portion 15, the surface can be a concave curved surface having a large radius of curvature, or can be concave shaped such that both ends in the width direction protrude linearly or in a rounded manner toward the receiving die 14 (such that it embraces the top end portion of the shape after upsetting work). In either case, in the upsetting work shown in (B) of FIG. 5, the part in the axial direction of the material 13 where the rack teeth 10 (see FIGS. 1 to 4) are to be formed, is pressed in the vertical direction, and the width dimension expands in the horizontal direction, with the result taken to be an intermediate material 20. The outer surface of the aforementioned portion of this intermediate material 20 comprises a partial cylindrical surface portion 17 that will become the rear portion 11 (see FIGS. 1, 3 and 4), a flat surface portion 18 that is located on the opposite side in the radial direction of the cross section from this partial cylindrical surface portion 17, and a pair of curved portions 19 that have a relatively small radius of curvature and that connect the partial cylindrical surface portion 17 and the flat surface portion 18.

Next, this intermediate material 20 is taken from the concave groove portion 15 of the receiving die 14, and as shown in (C) of FIG. 5, is inserted (set) in the bottom portion of a retaining hole 22 that is formed in the die 21. This retaining hole 22 has a U-shaped cross section where the radius of curvature of the bottom portion 23 is nearly the same as the radius of curvature R₁₅ on the inner surface of the concave groove portion 15 of the receiving die 14. Both inside surfaces 24 are flat surfaces that are parallel with each other. Furthermore, a pair of inclined guide surfaces 25, which is inclined in a direction such that the space between them expands going toward the top, is formed on the opening on the top end.

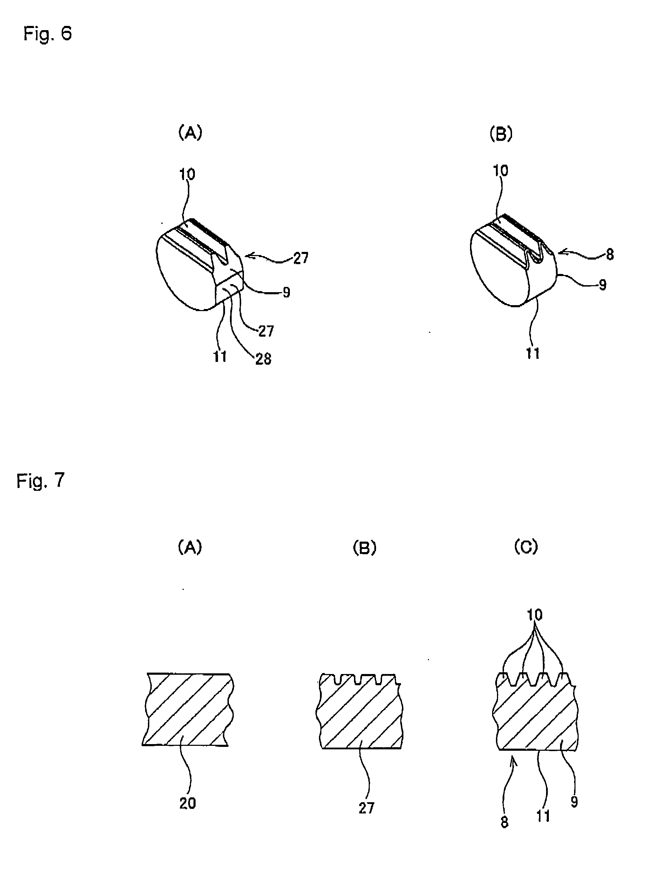

After the intermediate material 20 has been set in the retaining hole 22 of the die 21, then as shown in (C) to (D) of FIG. 5, a teeth-formation punch 26 is inserted into the retaining hole 22, and this teeth-formation punch 26 forcefully presses the intermediate material 20 inside the retaining hole 22. A wave-shaped uneven surface for forming teeth having a shape that corresponds to the rack teeth to be obtained is provided on the bottom surface of this teeth-formation punch 26. Except for the surface portion 18 where the rack teeth will be formed, the intermediate material 20 is confined by the inner surface of the retaining hole 22. Therefore, by forcefully pressing the intermediate material 20 inside the retaining hole 22 by the teeth-formation punch 26, the flat surface portion 18 of this intermediate material 20 is plastically deformed to correspond to the aforementioned wave-shaped uneven surface to form a crude rack 27 having rack teeth 10 as shown in (D) of FIG. 5 and (A) of FIG. 6. However, the crude rack 27 in this state has insufficient shape and dimension precision when compared with the rack 8 in the completed state (see FIGS. 1 to 4), and the edges of the rack teeth 10 are also still sharp. In addition, the excess material that was extruded when forming the rack teeth 10 (from the portion that becomes the bottom of the teeth) is forcefully pressed by both side surfaces 24 of the retaining hole 22, so flat flank surface portions 28 that are parallel with each other are formed on the left and right side surfaces of the crude rack 27.

After the teeth-formation punch 26 has been lifted, the crude rack 27 is removed from the retaining hole 22, and as shown in (E) of FIG. 5, is placed on an uneven sizing surface 30 that is formed on the top surface of a sizing die 29. When doing this, the crude rack 27 is turned upside down. This uneven sizing surface 30 has a shape that corresponds to the shape of the rack teeth 10 to be obtained that includes chamfered portion for the edges of the teeth (the uneven surface is inverted with respect to the shape of the teeth after completion). Here, as shown in (E) to (F) of FIG. 5, a pressing die 31 forcefully presses the portion of the crude rack 27 where the rack teeth 10 are formed toward the uneven sizing surface 30.

A concave pressing groove 32 having a radius of curvature that is the same as the radius of curvature R₁₁ (see FIG. 4) on the rear portion 11 of the rack 8 is formed on the bottom surface of the pressing die 31, and with the portion that will be the rear portion 11 fitting inside the concave pressing groove 32, the crude rack 27 is pressed forcefully toward the uneven sizing surface 30. Therefore, as shown in (F) of FIG. 5, with the sizing die 29 and the pressing die 31 sufficiently close together, the rack teeth 10 are formed into the completed state as shown in (B) of FIG. 6 (the shape and dimensions are precise, and the edges of each of the teeth are chamfered), and at the same time, the shape and dimensions of the rear portion 11 also become proper. The excess material that is extruded during sizing that is performed in this way collects in both of the flat flank surface portions 28. Therefore, both of these flat flank surfaces hardly remain in the completed rack 8. However, the excess material does not press the inner surfaces of the uneven sizing surface 30 or concave pressing groove 32 too forcefully, so not only is it possible to keep the processing load during sizing low, but it is also easy to maintain the durability of the sizing die 29 and pressing die 31.

As described above, for the rack 8 as shown in FIGS. 1 to 4, which is obtained in this way, it is possible to sufficiently maintain the width dimension, strength and rigidity of the rack teeth 10, and keep the rack 8 lightweight without increasing more than necessary the outer diameter of the portion where the rack teeth 10 are not formed.

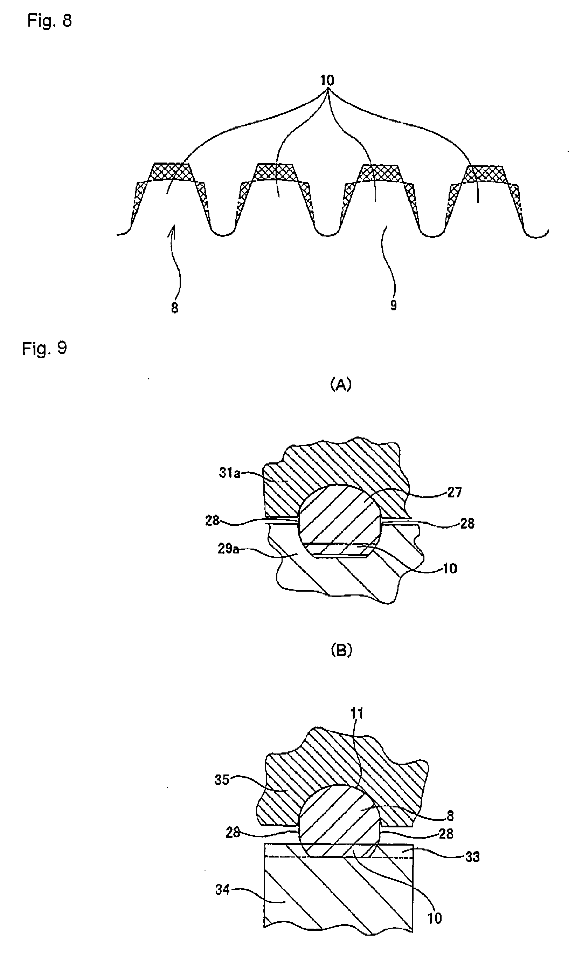

In the embodiment described above, the case was explained in which formation of the rack teeth 10 was performed in a single motion in the process shown in (C) to (D) of FIG. 5, however, this process could also be divided into two steps. In other words, first, with a teeth-formation punch having a shape that corresponds to a pressure angle that is less than the pressure angle of the rack teeth to be obtained performs the process shown in (A) to (B) of FIG. 7, to obtain the shape shown in (B) of FIG. 7 and the dashed lines in FIG. 8. Next, by pressing the portion that will become the rack teeth by a teeth-finishing punch having a shape that corresponds to the pressure angle of the rack teeth to be obtained, the rack teeth 10 that are shown in (C) of FIG. 7 and the solid line in FIG 8 are formed. In the process shown in (B) to (C) of FIG. 7, the metallic material that exists on the side surfaces of each of the teeth is moved toward the tip end of each of the teeth as shown by the cross-hatch lines in FIG. 8. After that, sizing as described above is performed.

By dividing the formation of the rack teeth 10 into two steps as described above, it is possible to keep the stress that is applied to teeth-formation punch that is used for forming the rack teeth in each process small, and thus it is possible to maintain the durability of the teeth-formation punch. In addition it becomes easy to ensure the precision of the obtained rack teeth.

In sizing as well, instead of performing sizing in one single motion as shown in (E) to (F) of FIG. 5, the sizing process can be performed in two steps as shown in FIG. 9. In the sizing process shown in FIG. 9, first, as shown in (A), the crude rack 27 is tightly held between the sizing die 29a and pressing die 31a to form the rack teeth shape. After that, as shown in (B), the crude rack 27 is tightly held again between a receiving die 34, in which an uneven receiving portion 33 that engages with the rack teeth 10 is formed on the top surface, and a pressing die 35, and the shape and dimensions of the rear portion 11 is adjusted, to complete the rack 8. The collecting of excess material in both of the flat flank surface portions 28 that moves during sizing is the same as in the case of performing the process in a single motion.

### [Second Embodiment]

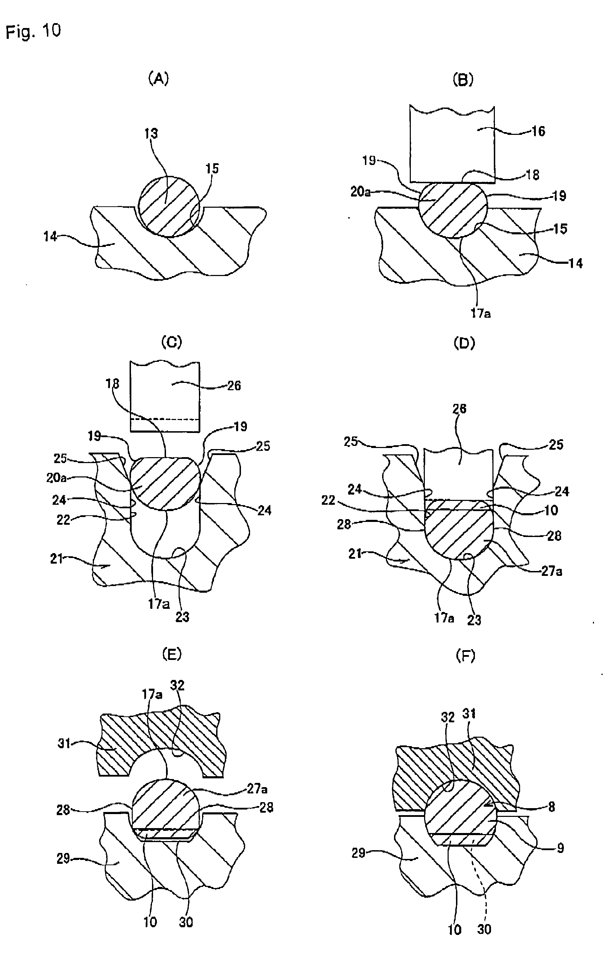

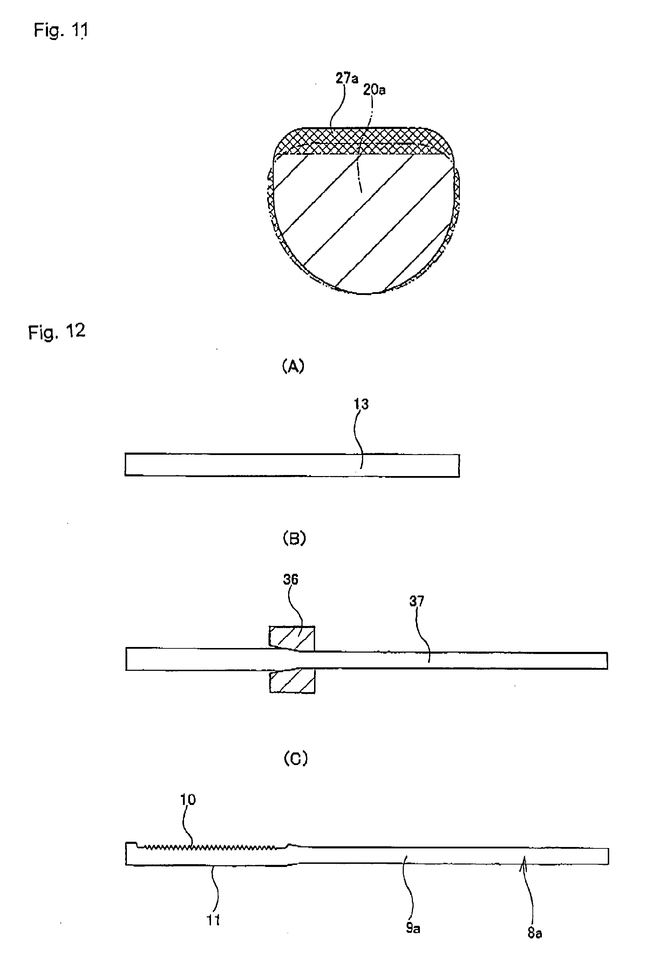

FIG. 10 and FIG. 11 show a second embodiment of the present invention. In this embodiment, the amount of processing in the upsetting work shown in (A) to (B) of FIG. 10 is greater than that in the case of the first embodiment described above, and the width dimension of the intermediate material 20a that is obtained in this upsetting work is larger than in the case of the first embodiment. In addition, the radius of curvature of the partial cylindrical surface portion 17a is greater than in the case of the first embodiment.

In this embodiment, as shown in (C) to (D) of FIG. 10, the intermediate material 20a as described above, is pressed into a retaining hole 22 of a die 21 while plastically deforming both end portions in the width direction. This die 21 is the same as that used in the first embodiment. However, since the amount that the width dimension of the intermediate material 20a is larger, when pressing the intermediate material 20a into the retaining hole 22, both end portions in the width direction of the intermediate material 20a are ironed by the continuous portion between the inside surfaces 24 and the inclined surfaces 25 of the retaining hole 22. As a result, as the metal material of the portions shown in FIG. 11 by the cross-hatching that exists at both end portions in the width direction is moved upward toward the cross-hatching shown on the top, the cross section of the intermediate material 20a changes from the shape shown by the dashed line in FIG. 11 to the shape shown by the solid line in the same figure. Moreover, after the intermediate material 20a is pressed to the back end portion of the retaining hole 22, rack teeth 10 are formed on this intermediate material 20a to obtain a crude rack 27a.

When comparing (C) and (D) of FIG. 5 described above with (C) and (D) of FIG. 10, or as can be clearly seen by comparing the dashed line with the solid line in FIG. 11, by pressing the wide intermediate material 20a into the retaining hole 22 while ironing both end portions in the width direction, it is possible to increase the width dimension of the portion where the rack teeth 10 are to be formed. Therefore, the width dimension of the rack teeth 10 can be secured.

As for the rest, the formation and function of this embodiment are the same as in the first embodiment described above, so any redundant drawings and explanation are omitted.

### [Third Embodiment]

FIG. 12 shows a third embodiment of the present invention. In the case of this embodiment, as shown in (A) to (B) of FIG. 12, by performing an ironing work on a material 13 by passing it through a die 36, the outer diameter of this material 13 is reduced except for part in the axial direction. Moreover, the result is taken to be a preliminary intermediate material 37 having a portion in the axial direction whose outer diameter is greater than the outer diameter of the remaining portion in the axial direction, and of this preliminary intermediate material 37, the portion in the axial direction having the larger diameter is plastically deformed in the same manner as in the first embodiment or in the second embodiment described above to obtain a rack 8a as shown in (C) of FIG. 12. In the case of this kind of embodiment, it is possible to reduce the diameter of the portion of the rack 8a that is separated in the axial direction from the portion where the rack teeth 10 are formed, and thus reduce the overall weight of the rack 8a.

### [Fourth Embodiment]

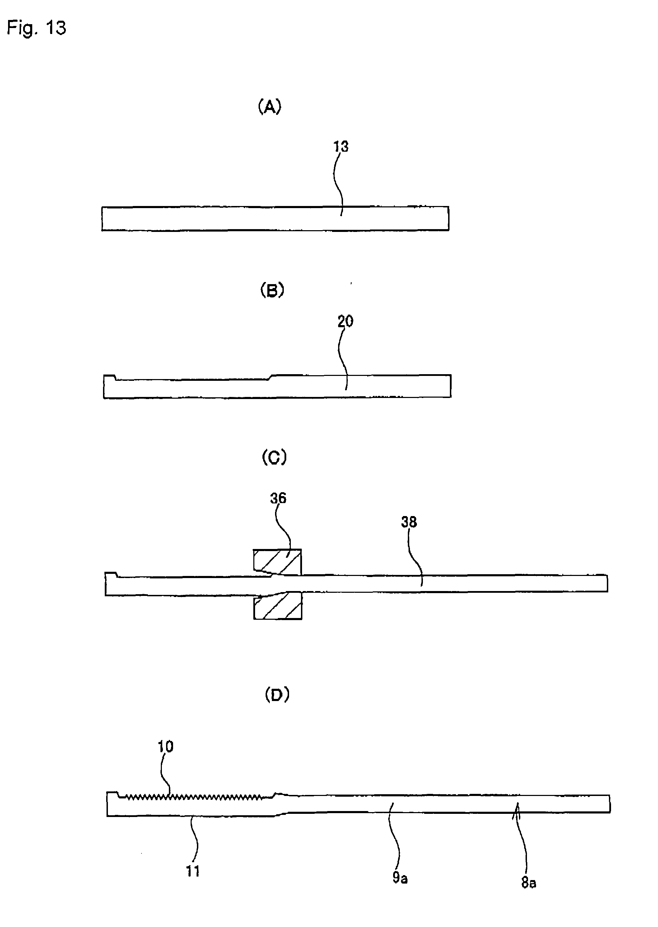

FIG. 13 shows a fourth embodiment of the present invention. In this embodiment, as shown in (A) to (B) of FIG. 13, a material 13 undergoes upsetting work as shown in (A) to (B) of FIG. 5 described above for example, to obtain an intermediate material 20. By performing an ironing work of this intermediate material 20 by passing it through a die 36 as shown in (C) of FIG. 13, the outer diameter of this intermediate material 20 is reduced except for part in the axial direction. The result is taken to be a second intermediate material 38 having a portion in the axial direction whose outer diameter is greater than the outer diameter of the remaining portion in the axial direction, and this second intermediate material 38 is plastically deformed in the same way as in the first embodiment or second embodiment described above to obtain a rack 8a as shown in (D) of FIG. 13. In this embodiment as well, it is possible to reduce the diameter of the portion of the rack 8a that is separated in the axial direction from the portion where the rack teeth 10 are formed, and thus reduce the overall weight of the rack 8a.

### [Fifth Embodiment]

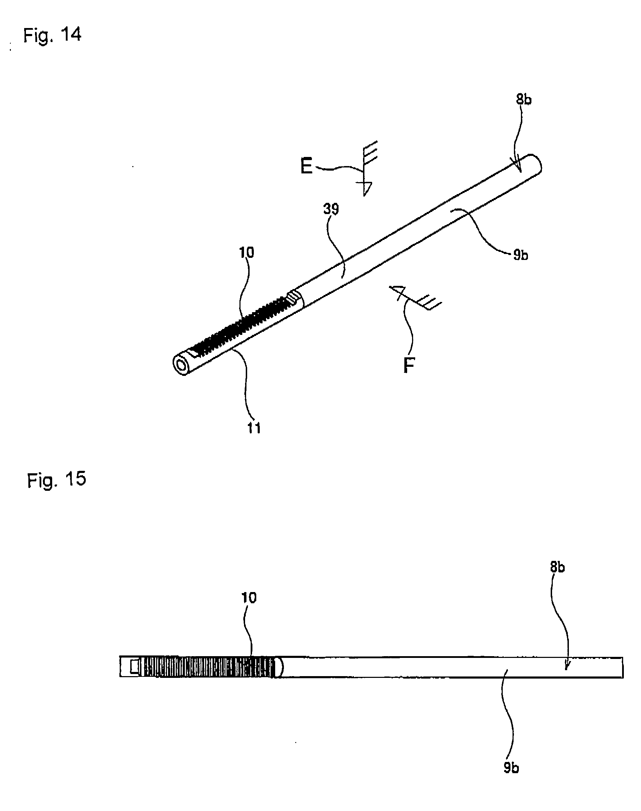

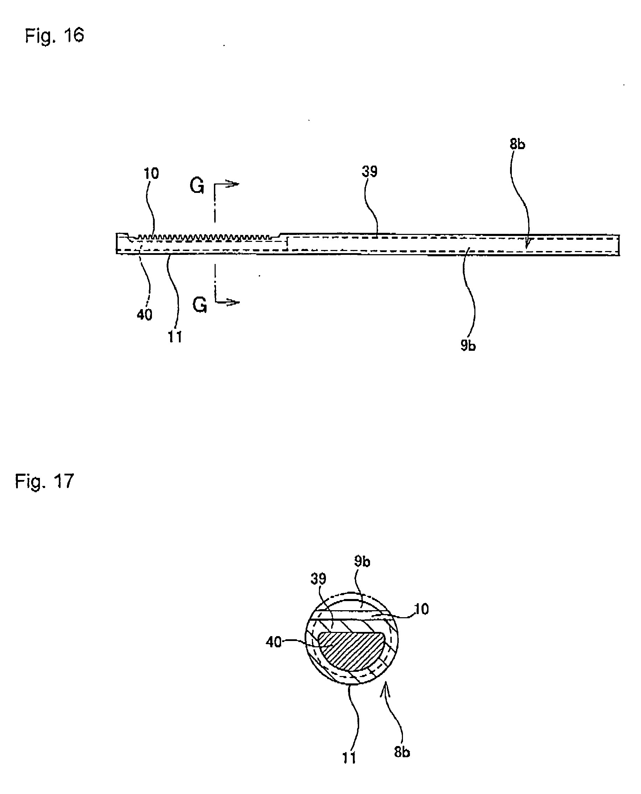

FIGS. 14 to 18 show a fifth embodiment of the present invention. In the case of the rack 8b of this embodiment, the rod unit 9b comprises a combination of an outer layer member 39 and inner layer member 40. Of these, the outer layer member 39 is formed into a cylindrical tube shape from a first metal material such as carbon steel or stainless steel having superior strength and wear resistance. The inner layer member 40 is formed into a circular rod shape from a lightweight second metal material such as aluminum alloy or magnesium alloy. Of these, the outer layer member 39 has a length dimension equal to the rack 8b that is to be made, and length of the inner layer member 40 is kept to a length that is equal to the length of the portion in the axial direction where the rack teeth 10 will be formed on the outer surface (a little extra length is provided such that it is a little longer than the portion where the rack teeth 10 are formed). This kind of inner layer member 40 and outer layer member 39 are combined by tightly fitting the inner layer member 40 inside the part toward one end in the axial direction of the outer layer member 39 (left end in FIGS. 14 to 16) by heated or cooled shrink fitting or the like.

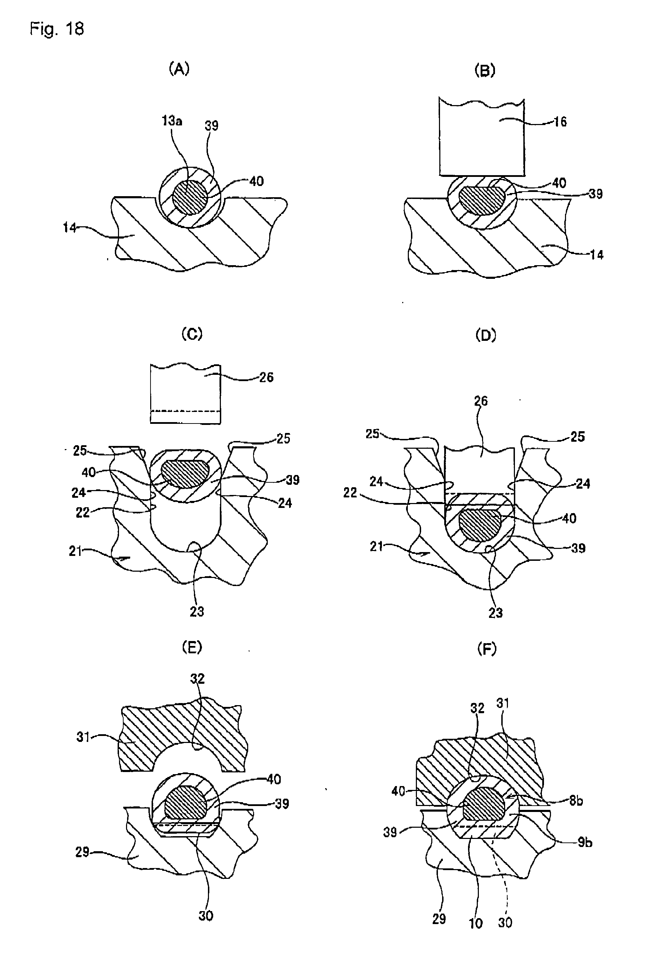

The material 13a that forms the rod unit 9b, which is the combined outer layer member 39 and inner layer member 40 as described above is plastically deformed as shown in (A) to (F) of FIG. 18 for example, in the same way as in the second embodiment shown in FIG. 10 or in the first embodiment shown in FIG. 5, to obtain the rack 8b as mentioned above.

With the construction and manufacturing method of this kind of embodiment, for the reasons explained above, it is possible to sufficiently make the overall rack 8b more lightweight while maintaining the strength of the rack teeth 10.

### [Sixth Embodiment]

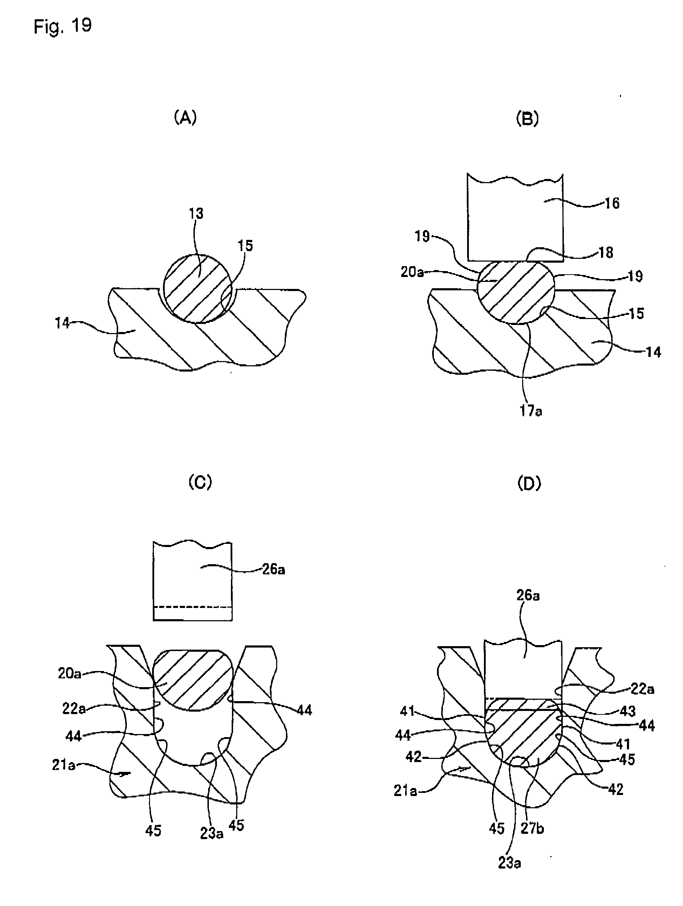

FIGS. 19 to 24 show a sixth embodiment of the present invention. This embodiment differs from the second embodiment shown in FIG. 10 and described above in that, in the process of forming the rack teeth 10, plastic working is performed to enlarge the radius of curvature of the cross sectional shape of the edges of both ends in the width direction of the crude rack teeth 43, and in order to leave a pair of flat guide surfaces 41 that is parallel with each other on both side surfaces of the completed rack teeth 10, a pair of flat flank surfaces 42 is formed adjacent to both flat guide surfaces 41, the flat flank surfaces 42 being inclined in a direction such that they come closer together as they extend further away from the flat guide surfaces 41. As for the rest, the formation, function and advantageous effects are the same as in the second embodiment described above, so an explanation of equivalent points will be either omitted or simplified, and the following explanation will center only on the points that are different from the second embodiment.

In this embodiment, a pair of flat guide surfaces 41 that is parallel with each other and a pair of flat flank surfaces 42 that is adjacent to both of these flat guide surfaces 41 are formed when processing the intermediate material 20a in the process (C) to (D) of FIG. 19 to obtain a crude rack 27b. These flat flank surfaces 42 are located in portions on opposite sides of the crude rack teeth 43 that are formed on part in the circumferential direction of the intermediate material 20a with both flat guide surfaces 41 as borders, and are inclined in a direction such that the space between them becomes more narrow going away from both flat guide surfaces 41.

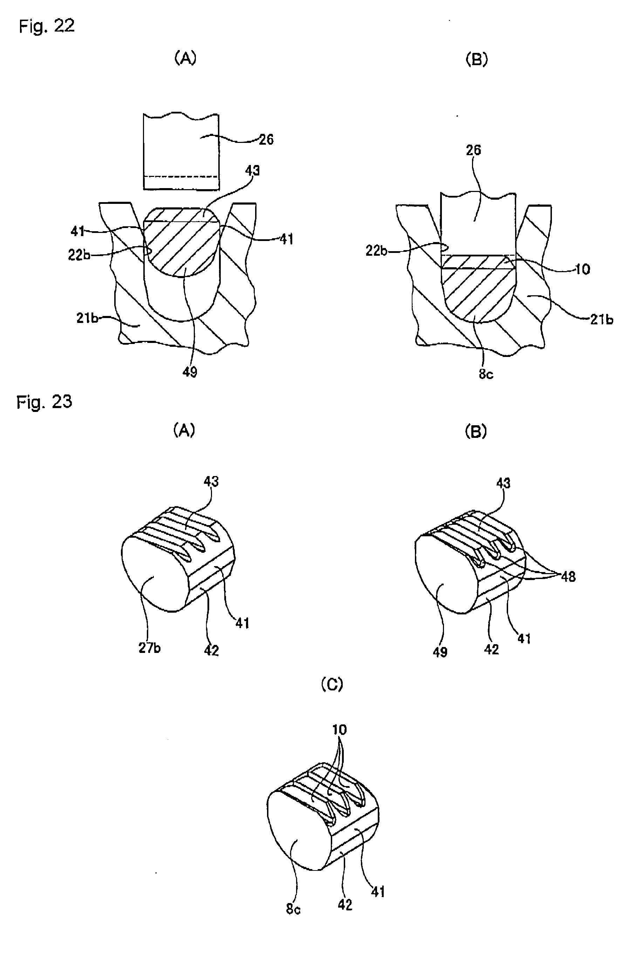

In order to form these flat flank portions 42, a pair of second flat formation surfaces 45 that is inclined in a direction such that the space between them becomes more narrow going away from a pair of flat formation surfaces 44 that is parallel with each other is provided in areas that are adjacent to the side of the bottom portion 23a of the pair of flat formation surfaces 44 in a portion of the inside surfaces of a retaining hole 22a, which is a concave formation groove that is formed in a die 21a. Moreover, when processing the intermediate material 20a in the process (C) to (D) shown in FIG. 19 to form a crude rack 27b, the flat flank surfaces 42 are formed in portions that correspond to the second flat formation surfaces 45 to obtain the crude rack 27b as shown in (A) of FIG. 23. In other words, crude rack teeth 43 are formed by a teeth-formation punch 26a having a shape that corresponds to a pressure angle that is less than the pressure angle of the rack teeth to be obtained, and the crude rack 27b is obtained.

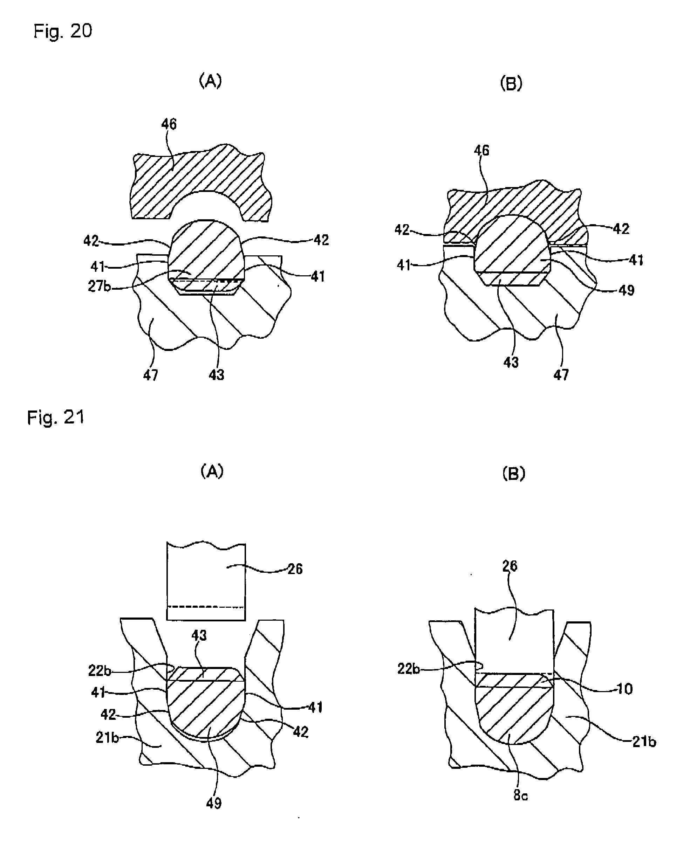

After that, as shown in (A) to (B) of FIG. 20, with the flat flank surfaces 42 located in the portion between a pair of metal dies, a pressing die 46 and receiving die 47, plastic working is performed to increase the radius of curvature of the cross sectional shape from the base of the teeth to the tip of the teeth on both ends in the width direction of the crude rack teeth 43. From this plastic working, the radius of curvature from the base of the teeth to the tip of the teeth on both ends in the width direction of the crude rack teeth 43 is increased, and curved portions 48 as shown in (B) of FIG. 23 are formed from the base of the teeth to the tip of the teeth on the edges on both end in the width direction of the crude rack teeth 43. These curved portions 48 are formed for preventing the edges on both ends in the width direction of the completed rack teeth 10 from interfering with other members, and for preventing concentrated stress at the edges. In the process of plastic working of the crude rack teeth 43 shown in (A) of FIG. 23 to obtain the rack teeth 10 shown in (C) of the same figure, this embodiment reduces the load on the metal dies that are used in the process of plastic working of the rack teeth 10 by forming curved portions 48 as shown in (B) of FIG. 23, as well as this embodiment prevents the occurrence of burrs, thus making it possible to obtain good shape precision and dimension precision of the obtained rack teeth 10. Moreover, in the case of this embodiment, the metal material that moves due to the plastic working of the curved portions 48 described above stops at the flat flank portions 42, which prevents the excess material from protruding out in the radial direction further than a virtual cylindrical surface that extends from the partial cylindrical surface 17a.

In the process (A) to (B) shown in FIG. 20, and the process (A) to (B) shown in FIG. 23, the radius of curvature of the curved portions 48 that are formed on the edges of both ends in the width direction of the crude rack teeth 43 is made to be larger than the radius of curvature of the curved portions that remain on both ends in the width direction of the completed rack teeth 10. The reason for this is to maintain the radius of curvature of the curved portions that remain on both ends in the width direction of the completed rack teeth 10 because in the process of finishing the crude rack teeth 43 into the rack teeth 10 as shown in (A) to (B) of FIG. 21 or FIG. 22, and (B) to (C) of FIG. 23 and explained below, there is a tendency for the radius of curvature of the curved portions 48 from the base of the teeth to the tip of the teeth on the edges on both ends in the width direction to become small.

After that, as shown in (A) to (B) of FIG. 21 or FIG. 22, the second intermediate material 49 that is formed with curved portions 48 as described above, is pressed inside the retaining hole 22b of a die 21b by a teeth-formation punch 26 in the same way as in the first embodiment, to form rack teeth 10. When doing this, as shown in FIG. 21, the inside dimension of the retaining hole 22b can be the same as the width dimension of the second intermediate material 49, or as shown in FIG. 22, can be a little smaller than the width dimension. When the inside dimension of the retaining hole 22b is less than the width dimension of the second intermediate material 49, the flat guide surfaces 41 that are located on both ends in the width direction of the second intermediate material are ironed in the process of forming the rack teeth 10. In either case, by pressing this second intermediate material 49 inside the retaining hole 22b of the die 21b by the teeth-formation punch 26, the rack teeth 10 are formed on the surface of one side in the circumferential direction, and a rack 8c is obtained in which the characteristics of the flat guide surfaces 41 have been made proper.

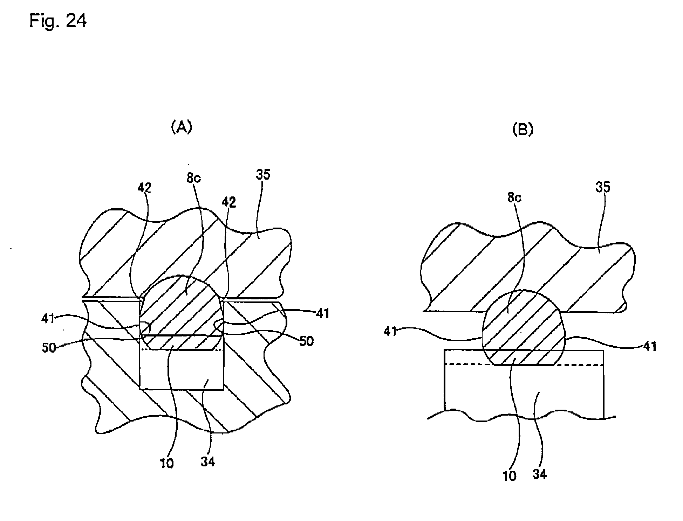

The rack 8c that has been obtained in this way can be used as is, however, when necessary sizing is performed in order to improve the precision of the rack teeth 10. This sizing is essentially performed in the same way as in the first embodiment described above. However, when it is necessary to maintain the precision of the flat guide surfaces 41, sizing is performed while restrain these flat guide surfaces 41 by restraining surfaces 50 as shown in (A) of FIG. 24. On the other hand, when it is not necessary to maintain the precision of these flat guide surfaces 41, it is only necessary to press the rack 8a into the receiving die 34 as shown in (B) of FIG. 24. With the rack 8a installed in a steering gear, the flat guide surfaces engage with the linear portion of a guide sleeve and are provided in order to prevent the rack 8a from displacement in the rotational direction. The other basic construction, function and advantageous effects are the same as in the case of the first embodiment described above.

### [Seventh Embodiment]

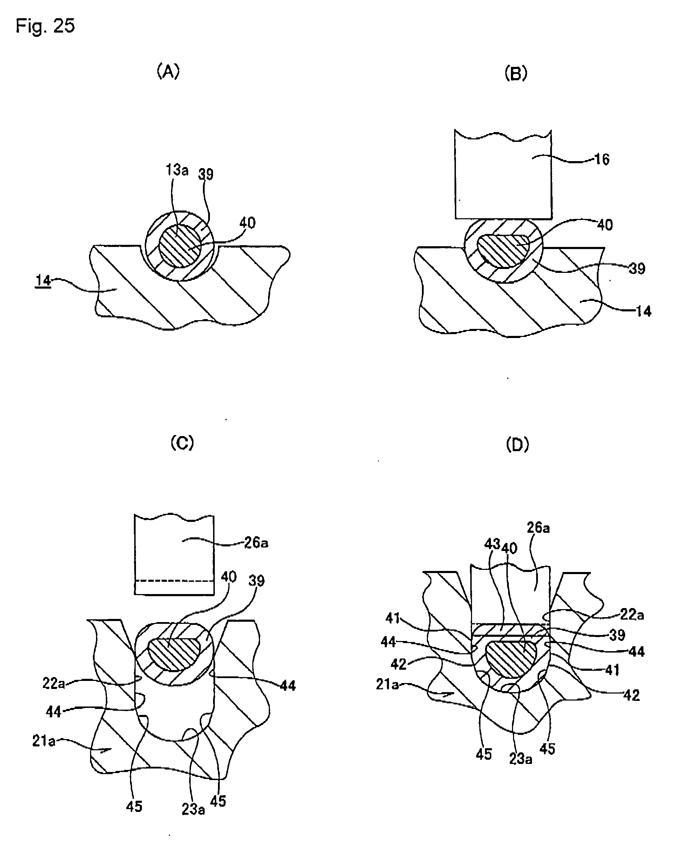

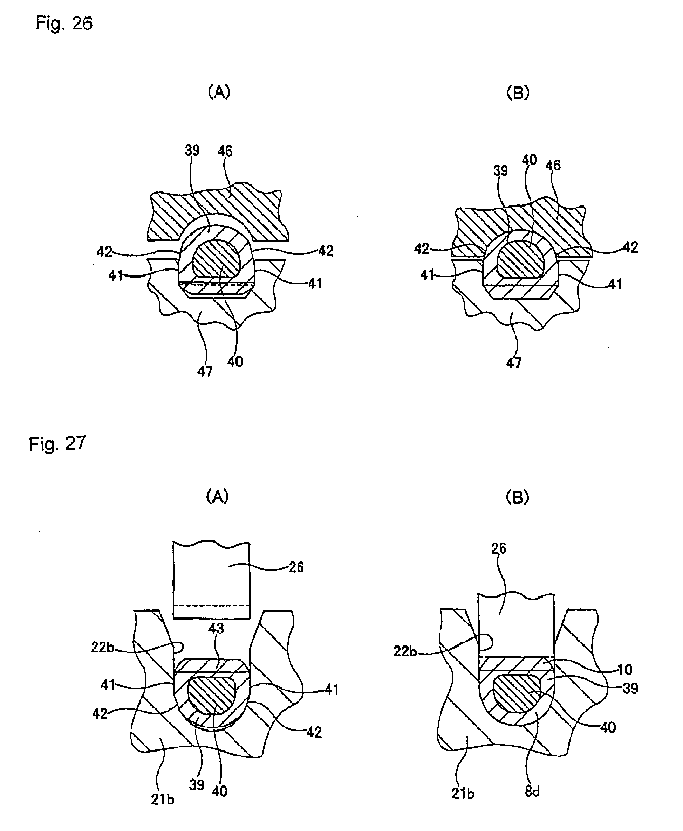

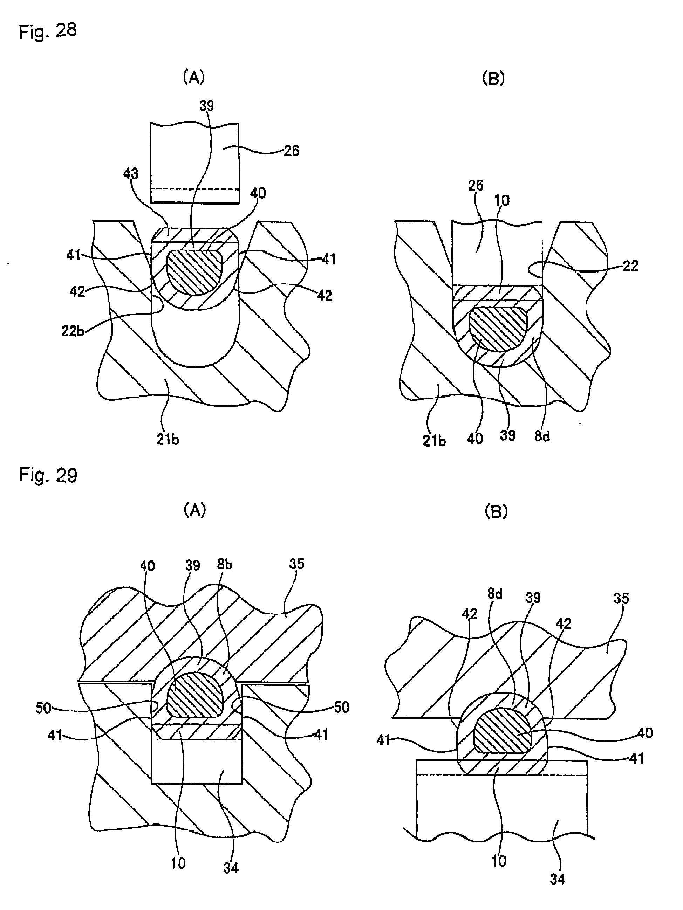

FIGS. 25 to 29 show a seventh embodiment of the present invention. This embodiment shows the case in which the construction of the fifth embodiment shown in FIGS. 14 to 18 and described above is made by the manufacturing method of the sixth embodiment described above. FIG. 25 that shows this embodiment corresponds with FIG. 19 that shows the sixth embodiment, and similarly FIGS. 26 to 28 correspond with FIGS. 20 to 22, and FIG. 29 corresponds with FIG. 24. With the construction and manufacturing method of this kind of embodiment, it is possible to sufficiently lighten the overall weight of the rack 8d while maintaining the strength of the rack teeth 10, as in the fifth embodiment, and together with reducing the load on the metal dies, it is also possible to improve the shape precision and dimension precision of the obtained rack teeth 10.

### [Eighth Embodiment]

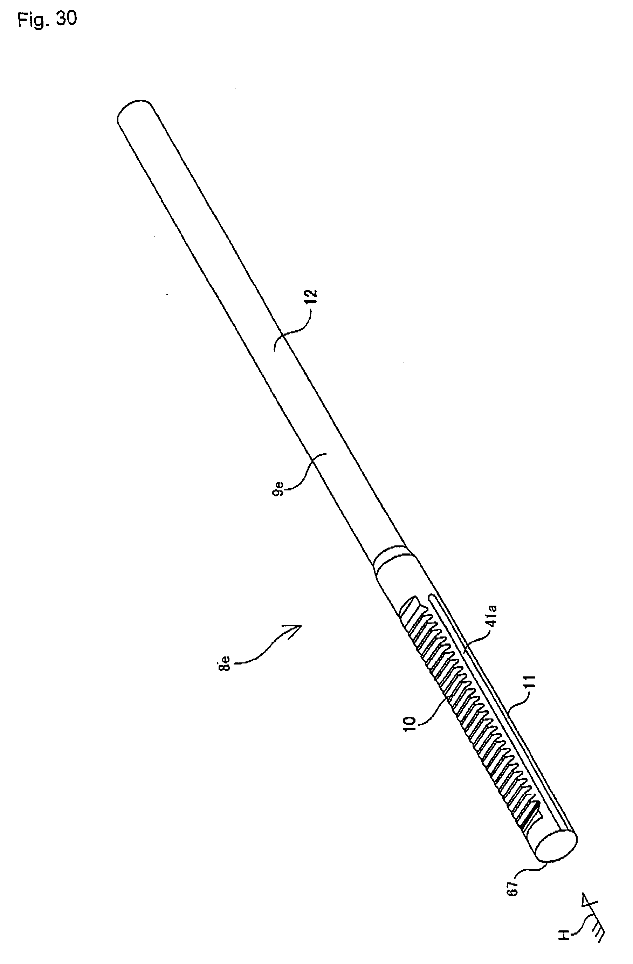

FIGS. 30 to 33 show an eighth embodiment of the present invention. First, the construction of the rack 8e that is made by the manufacturing method of this embodiment will be explained using FIG. 30.

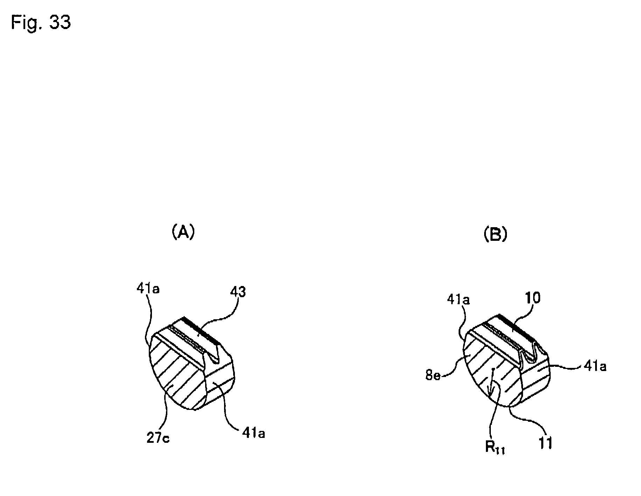

This rack 8e comprises: a solid rod unit 9e having a circular cross section and is made of a metal material such as carbon steel or stainless steel; and rack teeth 10 that are formed by plastic working of the surface on one side in the radial direction of part in the axial direction (left portion in FIG. 30) of the rod unit 9e. In this embodiment, the rod unit 9e is made from a single metal material that is the same over the entire length and from the outer surface to the center. In the case of this embodiment, the radius of curvature R₁₁ (see (B) of FIG. 33) of the cross sectional shape of the rear portion 11 that is separated in the circumferential direction from the portion where the rack teeth 10 are formed in a portion in the axial direction of the rod unit 9e, is greater than the radius of curvature r₁₂ of the outer surface of a circular rod portion 12 that is the remaining portion in the axial direction of the rod unit 9e (R₁₁ > r₁₂) (not shown in the figure).

Moreover, a pair of flat guide surfaces 41a that is parallel with each other is provided at two locations on the outer surface of the rack 8e that are separated in the circumferential direction, with each being continuous in the axial direction of the rack 8e. These flat guide surfaces 41a are located along a direction that is orthogonal to a virtual plane that comes in contact with tips of the rack teeth 10 that are formed on the surface of one side of the rack 8e. In this embodiment, the flat guide surfaces 41a are continuous in the axial direction from the portion on the outer surface of the rod unit 9e that corresponds to the portion where the rack teeth 10 are formed to the tip end (left end in FIG. 30). As is disclosed in Japanese Patent Application No. 2007-56867, these flat guide surfaces 41a are formed, in a state that the rack 8e is installed in a steering apparatus, to engage (slidingly contact) with the sliding portion on the inner surface of a guide sleeve for supporting the rack 8e such that the rack 8e is capable of moving in the axial direction inside a housing, and to prevent the rack 8e from rotating around its own center axis.

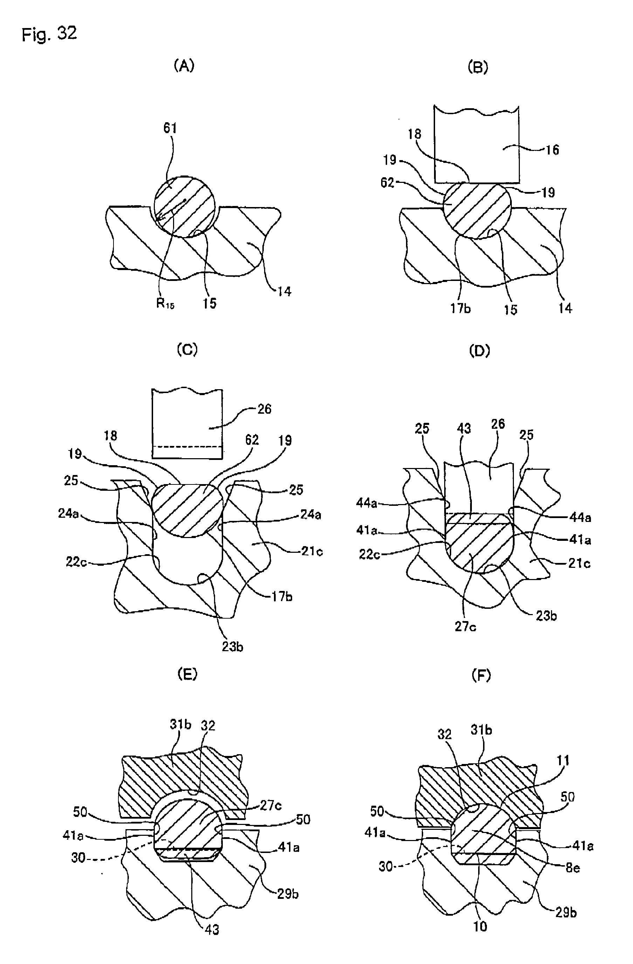

Next, the manufacturing method for the rack 8e described above will be explained using FIGS. 31 and 32.

First, as shown in (A) to (B) of FIG. 31, by performing a first ironing work on a circular rod shaped material 13 made of a metal material such as carbon steel or stainless steel by passing it through a die 36a, the outer diameter of part in the axial direction of this material 13 is reduced. More specifically, the outer diameter of the base end side (right end side in FIG. 31) is reduced so that it is less than that of the portion that corresponds to the portion where the rack teeth 10 (see FIG. 30) will be formed. And the outer diameter of the remaining portion in this axial direction with respect to this reduced diameter portion, or in other words, the outer diameter of the portion that corresponds to the portion where the rack teeth 10 are to be formed and the outer diameter of the portion further toward the tip end side (left end side in FIG. 31) than this portion is greater than the outer diameter of the portion in the axial direction with reduced diameter (portion further toward the base end side than the portion that corresponds to the portion where the rack teeth 10 are to be formed), where this resulting material is taken to be a first intermediate material 60. The reason for making the diameter of the base end side portion less than that of the portion that corresponds to the portion where the rack teeth 10 are to be formed is to make it possible for the completed rack 8e to be more lightweight.

Next, in the case of this embodiment, as shown in (B) to (C) of FIG. 31, by performing a second ironing work by passing the first intermediate material 60 for which the first ironing work was performed through a second die 36b the outer diameter of the portion of this first intermediate material 60 where the rack teeth 10 are to be formed is reduced. In other words, the portion further toward the tip end side than the portion that corresponds to the area where the rack teeth 10 are to be formed remains, and the outer diameter of the portion that corresponds to the portion where the rack teeth 10 are to be formed is reduced. In addition, by performing this kind of second ironing work and first ironing work described above, the diameter of the reduced diameter portion in the axial direction of the intermediate material 60, except for the portion nearer to the tip end side than the portion corresponding to where the rack teeth 10 will be formed, is reduced (performed over two steps), to obtain a second intermediate material 61. As will be explained later, the reason for making the outer diameter of the portion that is nearer the tip end side than the portion corresponding to where the rack teeth 10 will be formed greater than the outer diameter of the portion that corresponds to the portion where the rack teeth 10 will be formed in this way, is in order to make the surface around the rear surface of the flat surface portion, or in other words, the rear portion 11, continuous with the surface around the portion on the tip end side, with the radius of curvature R₁₁ of the rear portion 11 being increased due to the formation of the flat surface portion in the portion where the rack teeth 10 are to be formed (in order to leave metal material that is necessary for making the surfaces continuous). By making these surfaces continuous, formation is possible with the flat guide surface 41a reaching up to the edge on the tip end of the rod unit 9e (see FIG. 30).

After the second intermediate material 61 shown in (C) of FIG. 31 has been formed as described above, then as shown in (A) of FIG. 32, the second intermediate material 61 (the portion that corresponds with the portion where the rack teeth 10 will be formed and the portion that is nearer the tip end side than that portion) is set (placed) inside a concave groove portion 15 having an arc shaped cross section that is provided on the top surface of a receiving die 14. The radius of curvature R₁₅ of the inner surface of the concave groove portion 15 is nearly equal to radius of curvature R₁₁ (see (B) of FIG. 33) of the rear portion 11 that is located in the portion of the rack 8e (completed rack 8e) that is opposite in the radial direction from the rack teeth 10 (except for the spring back amount that occurs when the processing force is released) (R₁₅ ≈ R₁₁). Moreover, the radius of curvature R₁₅ of the inner surface of this concave groove portion 15 is nearly equal to the radius Rₐ (see (C) of FIG. 31) of the portion of the second intermediate member 61 that is nearer to the tip end side than the portion that corresponds to the portion where the rack teeth will be formed (R₁₅ ≈ R₁₁ ≈ Rₐ). After the second intermediate member 61 has been set inside the concave groove portion 15, as shown in (B) of FIG. 32, the tip end surface (bottom end surface) of a long pressure punch 16 that runs along the length of this concave groove portion 15 forcefully presses the second intermediate member 61 (the portion that corresponds to the portion where the rack teeth 10 will be formed) toward the concave groove portion 15, to perform a upsetting work (first plastic working).

The shape of the tip end surface of the pressure punch 16 is generally a flat surface. However, it could also be a concave curved surface having a large radius of curvature with respect to the width direction of the concave groove portion 15 (left and right direction in FIG. 32), or it could be a concave shape in which both end portions in the width direction protrude out linearly or in a curved manner toward the receiving die 14 (a shape that embraces the top end of the shape after upsetting work). In any case, in the upsetting work shown in (B) of FIG. 32, the portion in the part in the axial direction of the second intermediate member 61 where the rack teeth 10 will be formed is pressed in the vertical direction, and the width dimension in the horizontal direction expands to form a third intermediate member 62. This third intermediate material 62 comprises: a partial cylindrical surface portion 17b on the outer surface of the portion where the rack teeth 10 will be formed and that will become the rear portion 11; a flat surface portion 18 that is located on the opposite side in the radial direction of the cross section from the partial cylindrical surface portion 17b; and a pair of curved surface portions 19 that connects both surfaces 17b and 18 and that has a relatively small radius of curvature. In addition, the partial cylindrical surface portion 17b is continuous with the outer surface of the portion nearer the tip end side than the portion that corresponds to the portion where the rack teeth 10 will be formed (remaining portion on the tip end portion of the second intermediate material 61 whose diameter was not reduced during the second ironing work).

Next, the third intermediate material 62 is removed from the concave groove portion 15 of the receiving die 14, and as shown in (C) of FIG. 32, is inserted (set) into an opening of a concave formation groove (retaining hole) 22c that is located on a formation die 21c. This concave formation groove 22c has a U-shaped cross section, and the radius of curvature of the bottom portion 23b is nearly equal to the radius of curvature R₁₅ of the inner surface of the concave groove portion 15 of the receiving die 14. However, the inner width of the concave formation groove 22 is a little less than the outer width of the third intermediate material 62. Moreover, a pair of flat formation surfaces 44a that are parallel with each other is provided in the middle in the depth direction (vertical direction in (C) and (D) of FIG. 32) of both inner surfaces of the concave formation groove 22. Furthermore, a pair of inclined guide surfaces 25, which are inclined in a direction such that the space between them increases going in the upward direction, is provided in the opening in the top end. The third intermediate material 62 is set in the opening of the concave formation groove 22c so that it spans between the inclined guide surfaces 25.

After the third intermediate material 62 has been set in the opening of the concave formation groove 22c, then as shown in (C) to (D) of FIG. 32, a teeth-formation punch 26 forcefully presses the third intermediate material 62 into the concave formation groove 22c. As a result, this third intermediate material 62 is pressed into the concave formation groove 22 as both ends in the width direction plastically deform. When doing this, the portion of the third intermediate material 62 having a large width dimension is ironed by the continuous portion between the flat formation surfaces 44a and inclined guide surfaces 25 of this concave formation groove 22c as both ends in the width direction of the third intermediate material 62 are pressed inside the concave formation groove 22c. As a result, as the metal material of both ends in the width direction is moved upward, the cross section of the third intermediate material 62 changes from the state shown in (C) of FIG. 32 to the state shown in (D) (a second plastic working is performed).

Moreover, an uneven wave-shaped formation surface that corresponds to the rack teeth 10 to be obtained is provided on the bottom surface of the teeth-formation punch 26 for pressing the third intermediate material 62 inside the concave formation groove 22c. Therefore, after the teeth-formation punch 26 has pressed the third intermediate material 62 to the bottom portion 23b of the concave formation groove 22c, the teeth-formation punch 26 forcefully presses the third intermediate material 62 further so that the uneven wave shape is transferred to part of the third intermediate material 62 to form crude rack teeth 43 in that portion. As a result, the third intermediate material 62 that is shown in (C) of FIG. 32 becomes the crude rack 27c that is shown in (D). However, when compared with the completed rack 8e, the shape precision and dimension precision of the crude rack 27c in this state is insufficient, and the edges of the ends of the crude rack teeth 43 are still sharp.

In addition, the metal material that is extruded (from the portion that will be the bottom of the teeth) while forming the crude rack teeth 43 is forcefully pressed against the flat formation surfaces 44a of the concave formation groove 22c. Together with this, the portion of the crude rack 27c that is further toward the tip end side than the crude rack teeth 43 (left end portion in (C) of FIG. 31) is also pressed inside the concave formation groove 22c by the portion of the bottom surface of the teeth-formation punch 26 that is separated from the uneven wave-shaped portion. Therefore, on the respective portions which correspond to where the rack teeth 43 are formed of the left and right side surfaces of the crude rack 27c, the flat guide surfaces 41a, which are parallel with each other, are formed so that they reach to the edge on the tip end in the axial direction of this crude rack 27c. These flat guide surfaces 41a are located such that they are orthogonal to a virtual plane that comes in contact with the tip of the teeth of the crude rack teeth 43.

After the crude rack 27c described above has been made, the teeth-formation punch 26 is raised and the crude rack 27c is removed from the concave formation groove 22c, then as shown in (E) of FIG. 32, it is placed on an uneven sizing surface 30 that is formed on the top surface of a sizing die 29b. When doing this, the crude rack 27c is turned upside down. This uneven sizing surface 30 has a shape that corresponds to the shape of the rack teeth 43 to be obtained, including a chamfered portion for the edges on the end of the teeth (the uneven shape is inverted with respect to the completed shape). Moreover, a pair of restraining surfaces 50, which are flat surfaces that are parallel with each other, is provided on both sides of the uneven sizing surface 30 and they restrain the flat guide surfaces 41a. As shown in (E) to (F) of FIG. 32, a pressing die 31b forcefully presses the portion where the crude rack teeth 43 are formed on the crude rack 27c toward the uneven sizing surface 30.

A concave pressing groove 32 is formed on the bottom surface of the pressing die 31b so that it has a radius of curvature that is equal to the radius of curvature R₁₁ of the rear portion 11 of the rack 8e to be made, and with the portion that will become the rear portion 11 fitted inside the concave pressing groove 32, the crude rack 27c is forcefully pressed toward the uneven sizing surface 30. Therefore, with the sizing die 29b and the pressing die 31b sufficiently close as shown in (F) of FIG. 32, the rack teeth 10 become the completed rack teeth 10 shown in (B) of FIG. 33 from the crude rack teeth 43 having sharp edges shown in (A) of FIG. 33 (the shape and dimensions become proper, and the edges of each of the teeth become chamfered), and at the same time the shape and dimensions of the rear portion 11 also become proper. In addition, the flat guide surfaces 41a are pressed against the restraining surfaces 50, improving the surface precision.

For the rack 8e that is obtained in this way, it is possible to secure the width dimension, strength and rigidity of the rack teeth, and lighten the weight of the rack 8e without increasing more than necessary the outer diameter of the portion where the rack teeth 10 are not formed (outer diameter of the base end side of the rack teeth 10). In addition, plastic working of the flat guide surfaces 41a is performed at the same time that plastic working of the rack teeth 10 is performed, so the rack 8e having the desired shape with flat surfaces 41a can be made at low cost.

In other words, as shown in FIG. 31, before performing the plastic working for forming the rack teeth 10, a first and second ironing works are performed for bringing the outer diameter of the material 13 (cross sectional shape) to a desired value. Therefore, in addition to preventing excess material from protruding outward in the radial direction and becoming burrs, and improving yield by reducing material costs, it is possible to control the processing load required for forming the rack teeth 10 and eliminate the need for processing afterward to remove the excess material. Also, not only does this embodiment make it so that this kind of excess material does not occur (the excess material is moved), but due to the shape that is required after the rack 8e has been completed, the desired shape can be regulated, taking into consideration the metal material that is extruded by the plastic working.

In other words, in the case of this embodiment, by performing a second ironing work to form both of the flat guide surfaces 41a so that they reach the edge on the tip end of the rack 8e in the completed state, metal material is left at the tip end in the state of the second intermediate material 61. Therefore, with the rack teeth 10 formed, it is possible to make the rear portion of the rack teeth 10 continuous with the outer surface around the portion further toward the tip end than the rack teeth 10, and it is possible to form the flat guide surfaces 41a so that they reach the edge of the tip end of the rack 8e in the state after the rack 8e has been completed. Moreover, differing from a cutting process such as swaging or turning which is required in the case of the conventional art disclosed in patent document 3 described above, the ironing work, which is a kind of plastic working, for regulating the shape (cross sectional shape) of the material 13 in this way can segue into the other plastic working for forming the rack teeth 10 or the like. Therefore, the production process for the overall rack 8e can be performed with good efficiency, so by performing the ironing work described above, it is possible to suppress an increase in production cost of the rack 8e somewhat. In addition, there is no need for processing equipment for cutting, grinding, gun drilling or the like, so from the aspect of keeping equipment related investment to a minimum as well, the rack 8e can be manufactured at low cost.

### [Ninth Embodiment]

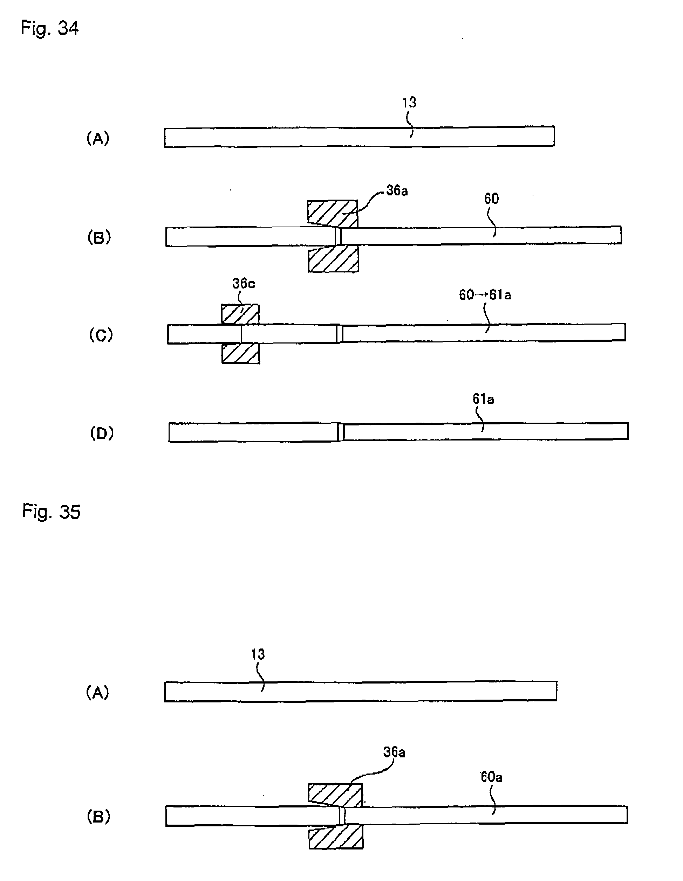

FIG. 34 shows a ninth embodiment of the present invention. In the case of this embodiment, a second ironing work is performed on the first intermediate material 60 on which a first ironing work was performed by passing the first intermediate material 60 through a second die 36c as shown in (C) to (D) of FIG. 34. In addition, the outer diameter of the portion of the first intermediate material 60 where the rack teeth 10 (see FIG. 1) are to be formed and the portion further toward the tip end side than the portion corresponding to where the rack teeth 10 are to be formed is reduced. In the case of this kind of embodiment, construction (see (C) of FIG. 34) as in the eighth embodiment, in which the outer diameter of the portion further toward the tip end side than the portion corresponding to where the rack teeth 10 will be formed is greater than the remaining portion, is not used as a second intermediate material 61a on which this kind of second ironing work is performed. Therefore, as is in a state with the rack teeth 10 formed, the radius of curvature of the portion on the tip end side becomes less than the radius of curvature of the rear portion 11 (see FIG. 30) of the portion where the rack teeth 10 are formed. In other words, as is, it is not possible to form the flat guide surfaces 41a so that they reach the edge of the tip end of the rack 8e (see FIG. 30) as in the eighth embodiment described above.

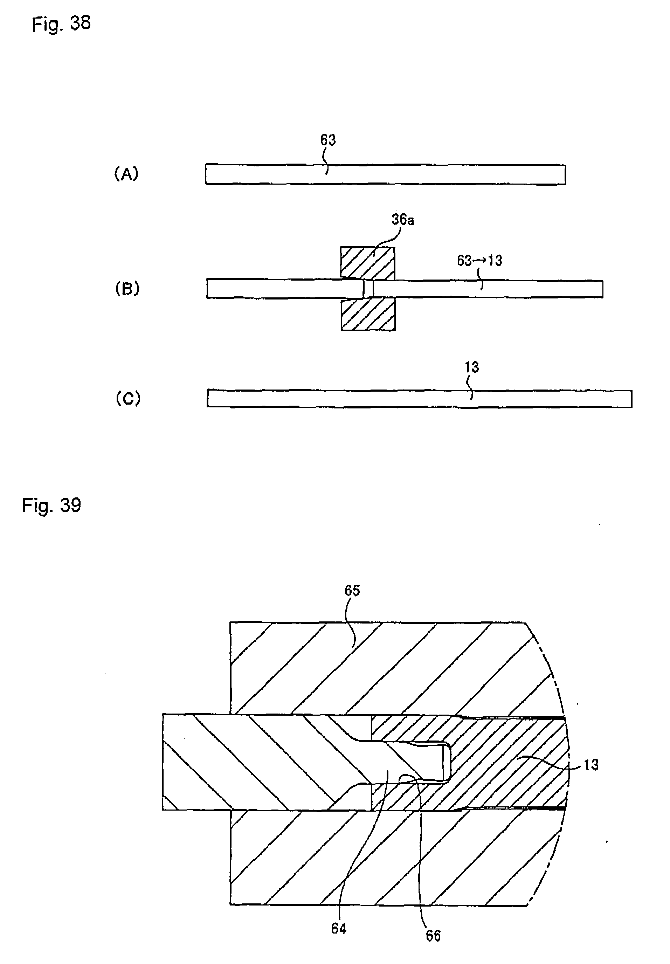

In this case, when it is not necessary to form the flat guide surfaces 41a so that they reach the edge on the tip end of the rack 8e, or in the case where this kind of flat guide surface 41a is not formed, the rack 8e is okay as is. However, in the case in which it is necessary to form these flat guide surfaces 41a so that they reach the edge of the tip end of the rack 8e, it is possible to perform a diameter expansion process on the second intermediate material 61a such as is explained in the fourteenth embodiment (see FIG. 39) later. Also, besides this, when performing a pressing work for forming rack teeth 10 (for example when performing the process shown in (C) to (D) of FIG. 32 described above), by compressing the outer surface of the tip end portion (pushing up the metal material of the portion on the tip end that corresponds to the rear portion), the metal material of the portion of the tip end corresponding to where the flat guide surfaces 41a are to be formed is ensured, and therefore these flat guide surfaces 41a can be formed such that they reach the edge of the tip end of the rack 8e, being continuous along the axial direction of the rack 8e. When the diameter of the tip end portion is made large as was described above, the outer surface can be made continuous (unevenness in the outer surface can be eliminated) without having to compress the outer surface of the tip end portion in this way.

As for the rest, the construction and function is the same as in the eighth embodiment described above, so any redundant figures or explanations are omitted.

### [Tenth Embodiment]

FIG. 35 shows a tenth embodiment of the present invention. In the case of this embodiment, before performing the plastic working as shown in FIG. 32 and described above, an ironing work is performed on the material 13 as shown in (A) to (B) of FIG. 35, and the outer diameter of the portion further toward the base end side than the portion corresponding to where the rack teeth 10 (see FIG. 30) will be formed is reduced to obtain a first intermediate material 60a. Also, by performing plastic working on this first intermediate material 60a as shown in FIG. 32 and described above, a rack 8e is formed, for example as shown in FIG. 30. In other words, in the case of this embodiment, a second ironing work as in the case of the eighth and ninth embodiments described above is not performed. In this embodiment, the ironing work described above is performed before performing the upsetting work (plastic working), however, it is also possible to perform the ironing work after finishing the upsetting work (plastic working) shown in (A) to (B) of FIG. 32. Deciding which process to perform is determined by taking into consideration whether the plastic working and ironing works can be performed well together. Whether or not to form the flat guide surfaces 41a (see FIG. 30), or whether or not to form the flat guide surfaces 41a so that they reach the edge on the tip end of the rack 8e (see FIG. 30) can be freely decided. A diameter expansion process such as explained in the ninth embodiment above can also be used as needed.

As for the rest, the construction and function is the same as those of the eighth and ninth embodiments described above, so any redundant figures or explanations are omitted.

### [Eleventh Embodiment]

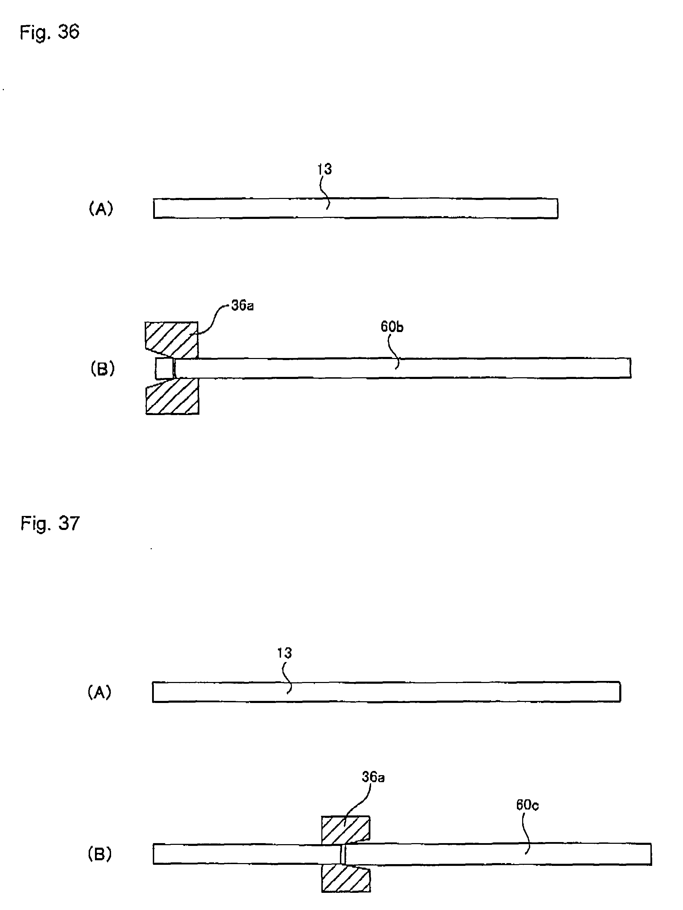

FIG. 36 shows an eleventh embodiment of the present invention. In this embodiment, before performing the plastic working as shown in FIG. 32 and described above, an ironing work is performed on the material 13 as shown in (A) to (B) of FIG. 36, and the outer diameter, except that of the portion further toward the tip end side than the portion corresponding to where the rack teeth 10 (see FIG. 30) will be formed, is reduced to obtain a first intermediate material 60b. Also, by performing plastic working on this first intermediate material 60b as shown in FIG. 32 and described above, a rack 8e is formed, for example as shown in FIG. 30.

In the case of this kind of embodiment, an ironing work is not performed in order to the outer diameter of the portion nearer the base end side than the portion corresponding to where the rack teeth 10 are to be formed smaller than that of the portion where the rack teeth 10 will formed as was done in the eighth to tenth embodiments described above. However, by performing an ironing work such as described in the tenth embodiment (see FIG. 35) after performing the ironing work shown in (A) to (B) of FIG. 36 described above, it is possible to reduce the outer diameter of the portion nearer the base end side than the portion corresponding to where the rack teeth 10 will be formed. By reducing the outer diameter of the base end side in this way, it is possible to lighten the weight.

As for the rest, the construction and function is the same as those of the eighth to tenth embodiments described above, so any redundant figures or explanations are omitted.

### [Twelfth Embodiment]

FIG. 37 shows a twelfth embodiment of the present invention. In this embodiment, before performing the plastic working as shown in FIG. 32 and described above, an ironing work is performed on the material 13 as shown in (A) to (B) of FIG. 37, and the outer diameter of the portion corresponding to where the rack teeth 10 (see FIG. 30) will be formed, and that of the portion further toward the tip end side than that portion are reduced to obtain a first intermediate material 60c. Also, by performing plastic working on this first intermediate material 60c as shown in FIG. 32 and described above, a rack 8e is formed, for example as shown in FIG. 30. In this embodiment, the outer diameter of the portion further toward the base end side than the rack teeth 10 is not reduced unlike in the rack 8e shown in FIG. 30, and the outer diameter of this portion is left the same as the outer diameter of the material 13, making it possible to secure the rigidity of this portion.

As for the rest, the construction and function is the same as those of the eighth to eleventh embodiments described above, so any redundant figures or explanations are omitted.

### [Thirteenth Embodiment]

FIG. 38 shows a thirteenth embodiment of the present invention. In this embodiment, before performing the plastic working as shown in FIG. 32 and described above, or before performing the ironing work as shown in FIGS. 31, 34 to 37, an ironing work is performed on a preliminary material 63 as shown in (A) to (C) of FIG. 38 to reduce the outer diameter over the entire axial direction of the preliminary material 63 to obtain the material 13. Moreover, an ironing work as shown in FIGS. 31, 34 to 37 is performed as needed on this material 13, and by performing plastic working as shown in FIG. 32 and described above, a rack 8e as shown in FIG. 30 is obtained.

As for the rest, the construction and function are the same as those of the eighth to twelfth embodiments described above, so any redundant figures or explanations are omitted.

### [Fourteenth Embodiment]

FIG. 39 shows a fourteenth embodiment of the present invention. In this embodiment, before, after or while performing an ironing work as shown in FIGS. 34, 35, 37 or 38, or performing plastic working as shown in FIG. 32 described above, a diameter expansion punch 64 having a diameter that is smaller than the material 13 is pressed in the axial direction against the end surface in the axial direction of the circular rod shaped material 13, and a concave hole 66 is formed in the end in the axial direction of the material 13 by plastic working. By forming a concave hole 66 in this way in at least part in the axial direction of the material 13, the outer diameter of the portion where this concave hole 66 is formed is increased (diameter expansion is performed). More specifically, with the tip end portion in the axial direction of the material 13 (left end in FIG. 39) inserted into a diameter expansion die 65, by bringing the punch 64 in contact with the tip end surface of the material 13 and plastically deforming the tip end of the material 13 to form the concave hole 66, the outer diameter of part in the axial direction of the material 13 is increased in the portion nearer to the tip end side than the portion where the rack teeth 10 (see FIG. 30) will be formed. The reason for increasing the outer diameter of this portion in this way is similar to the reason for increasing the outer diameter of that portion shown in FIG. 31 or FIG. 36, and is for forming flat guide surfaces 41a so that in the completed state, they reach the edge on the tip end of the rack 8e (see FIG. 30). The concave hole 66 that is formed on the tip end surface by the punch 64 can be used as a bottom tap hole when forming a female screw. In addition, it is also possible to tightly fit a metal material inside the concave hole 66 to close off this concave hole 66.

The diameter expansion process described above can be performed after the second intermediate material 61a shown in (D) of FIG. 34 is formed by reducing the diameter of the outer diameter of the portion of part in the axial direction of the material 13 (does not mean the same portion as the 'part' where diameter expansion is performed) nearer to the base end portion than the portion that corresponds to where the rack teeth 10 will be formed as done in the ninth embodiment shown in FIG. 34 and described above, or can be performed while (performed at the same time as) performing the second ironing work shown in (C) of FIG. 34. Moreover, the diameter expansion process described above can be performed after the first intermediate material 60a shown in (B) of FIG. 35 is formed by reducing the diameter of the outer diameter of the portion of part in the axial direction of the material 13 (does not mean the same portion as the 'part' where diameter expansion is performed) nearer to the base end portion than the portion that corresponds to where the rack teeth 10 will be formed as done in the tenth embodiment shown in FIG. 35 and described above, or can be performed while (performed at the same time as) performing the ironing work shown in (B) of FIG. 35. Also, the diameter expansion process described above can be performed after the first intermediate material 60c shown in (B) of FIG. 37 is formed by reducing the diameter of the outer diameter of the portion of part in the axial direction of the material 13 (does not mean the same portion as the 'part' where diameter expansion is performed) that corresponds to where the rack teeth 10 will be formed as done in the twelfth embodiment shown in FIG. 37 and described above. Furthermore, the diameter expansion process described above can be performed after the material 13 as shown in (C) of FIG. 38 is formed by reducing the outer diameter along the entire axial direction of the preliminary material 63 as done in the thirteenth embodiment shown in FIG. 38. After the diameter expansion process has been performed as described above, plastic working as shown in FIG. 32 and described above is performed to obtain a rack 8e as shown in FIG. 30.

It is possible to perform plastic working as shown in FIG. 32 as is after performing the diameter expansion process shown in FIG. 39 above on the circular rod shaped material 13 without performing an ironing work as described above, and obtain a rack 8e as shown in FIG. 30, for example. It is also possible to perform the diameter expansion process described above after finishing the upsetting work (plastic working) shown in (A) to (B) of FIG. 32, for example, instead of before performing the plastic working as shown in FIG. 32. Deciding which process to perform is determined by taking into consideration whether the plastic working and ironing work can be performed well together, or by taking into consideration the processing accuracy, the required shape after the rack is completed or the like.

As for the rest, the construction and function are the same as those of the eighth to thirteenth embodiments described above, so any redundant figures or explanations are omitted.

### Industrial Applicability

The rack of the present invention can be applied as a rack for a steering gear unit 5 as shown in FIG. 40 and described above, and makes it possible to reduce the cost and lighten the weight of the steering gear unit 5. However, the present invention is not limited to use in this kind of steering gear unit 5, and can be applied as the rack installed in various kinds of machinery and the like, contributing to the cost reduction and weight reduction of the machinery.

## Claims

1. A rack comprising:
a rod unit that is made of a metal material and of which at least part in the axial direction has a solid circular cross section; and
rack teeth that are formed by plastic working of the surface on one side in the radial direction of the solid portion of the part in the axial direction of the rod unit,
the radius of curvature of the cross sectional shape of a portion that is separated in the circumferential direction from the portion where the rack teeth are formed of the outer surface of the solid portion of the part in the axial direction, being larger than the radius of curvature of the cross sectional shape of the outer surface of the remaining portion in the axial direction of the rod unit.

2. The rack of claim 1 wherein the rod unit is made a single member from the same kind of metal material over the entire length and from the outer surface to the center.

3. The rack of claim 1 wherein the rod unit comprises an outer layer member that is made into a tube shape from a first metal material, and an inner layer member that is made into a rod shape from a second metal material, and that is tightly fitted inside the outer layer member.

4. A manufacturing method for a rack that comprises:
a rod unit that is made of a metal material and of which at least part in the axial direction has a solid circular cross section; and
rack teeth that are formed by plastic working of the surface on one side of the solid portion in the radial direction of part in the axial direction of the rod unit,
the radius of curvature of the cross sectional shape of a portion that is separated in the circumferential direction from the portion where the rack teeth are formed of the outer surface of the solid portion of the part in the axial direction, being larger than the radius of curvature of the cross sectional shape of the outer surface of the remaining portion in the axial direction of the rod unit,
comprising steps of:
performing a first plastic working on part in the axial direction of a rod shaped material that will become the rod unit, by compressing a portion in the circumferential direction of the part in the axial direction, and forming a partial cylindrical surface on the remaining portion in the circumferential direction of the part in the axial direction, the radius of curvature of the partial cylindrical surface being larger than the radius of curvature of the outer surface of the rod shaped material, to obtain an intermediate material; and
performing a second plastic working to form rack teeth on the portion in the circumferential direction of the part in the axial direction of the intermediate material.

5. The rack manufacturing method of claim 4, wherein the first plastic working is an upsetting work in which, by compressing the part in the axial direction of the material in the radial direction, the portion of the outer surface of the part in the axial direction where the rack teeth will be formed is made into a flat surface, and the remaining portion that is separated from the flat surface is made into a partial cylindrical surface whose radius of curvature of the cross sectional shape is larger than the radius of curvature of the cross sectional shape of the outer surface of the material.

6. The rack manufacturing method of claim 4 wherein the second plastic working is a press process in which the remaining portion that is separated from the flat surface of the part in the axial direction of the intermediate material is supported by a retaining hole of a die, and the rack teeth are formed on the flat surface by pressing a teeth-formation punch, having an uneven shape corresponding to the teeth to be formed, against the flat surface.

7. The rack manufacturing method of claim 6 wherein the space between the inner surfaces of the retaining hole in the die is less than the outer diameter of the intermediate material in the width direction of the flat surface, and the teeth-formation punch presses the intermediate material into the retaining hole, the rack teeth are formed on the flat surface while metal material of both ends in the width direction of the intermediate material is moved to the flat surface.

8. The rack manufacturing method of claim 4 wherein the second plastic working method is divided into a plurality of steps, and after a teeth-formation punch, having a shape that corresponds to the pressure angle that is less than the pressure angle of the rack teeth to be obtained, forms crude rack teeth, a teeth-finishing punch, having a shape that corresponds to the pressure angle of the rack teeth to be obtained, presses the crude rack teeth.

9. The rack manufacturing method of claim 8 wherein after the crude rack teeth have been formed, a plastic working is performed to increase the radius of curvature of the cross sectional shape of at least the edges from the base of the teeth to the tip of the teeth of both ends in the width direction of the crude rack teeth, then the teeth-finishing punch presses the crude teeth to form the crude rack teeth into the rack teeth.

10. The rack manufacturing method of claim 9 wherein the plastic working makes the radius of curvature of the cross sectional shape of the edges from the base of the teeth to the tip of the teeth of both ends in the width direction of the crude rack teeth larger than the radius of curvature of the cross sectional shape of the edges from the base of the teeth to the tip of the teeth of both ends in the width direction of the completed rack teeth.

11. The rack manufacturing method of claim 9 wherein after the crude rack teeth have been formed and a pair of flat flank surfaces has been formed on both sides of the crude rack teeth at the start or beginning half of the second plastic working, with these flat flank surfaces located between a pair of dies, plastic working is performed to increase the radius of curvature of the cross sectional shape of the base of the crude rack teeth, where the metal material that is moved by this plastic working is stopped by the flat flank surfaces, and the excess material is prevented from protruding outward in the radial direction further than a virtual cylindrical surface that extends from the partial cylindrical surface.

12. The rack manufacturing method of claim 4 wherein after the second plastic working, sizing is performed to adjust the shape of the rack teeth.

13. The rack manufacturing method of claim 12 wherein after forming the rack teeth and the pair of flat flank surfaces on both ends of the rack teeth by the second plastic working, sizing is performed to improve the precision of the rack teeth, where the metal material that is moved by this sizing is stopped by the flat flank surfaces, and the excess material is prevented from being protruding outward in the radial direction further than a virtual cylindrical surface that extends from the partial cylindrical surface.

14. The rack manufacturing method of claim 4 wherein by performing an ironing work in which the material is passed through an ironing die so as to reduce the outer diameter of the material except for part in the axial direction thereof before the first plastic working, a preliminary intermediate material of which the outer diameter of the part in the axial direction of the material is larger than the outer diameter of the remaining part in the axial direction is formed, after which the first plastic working is performed on the preliminary intermediate material.

15. The rack manufacturing method of claim 4 wherein by performing an ironing work in which the intermediate material is passed through an ironing die so as to reduce the outer diameter of the intermediate material except for part in the axial direction thereof after performing the first plastic working and before performing the second plastic working, a second intermediate material is formed of which the outer diameter of the part in the axial direction is greater than the outer diameter of the remaining part in the axial direction, after which the second plastic working is performed on the second intermediate material.

16. A rack manufacturing method for a rack comprising:
a rod unit that is made of metal and has a circular cross sectional shape, and
rack teeth that are formed by plastic working of the surface on one side in the radial direction of part in the axial direction of the rod unit, comprising a step of:
performing an ironing work in which a circular rod shaped material that will become the rod unit is passed through an ironing die so as to reduce the outer diameter of at least a portion in the axial direction of the material, at least either:
before performing a first plastic working in which a flat surface portion where the rack teeth will be formed on part in the axial direction of the material by compressing a portion in the circumferential direction of the part in the axial direction, or
after performing the first plastic working and before performing a second plastic working of forming the rack teeth on the flat surface.

17. The rack manufacturing method of claim 16 wherein the ironing work is performed before performing the first plastic working, to reduce the outer diameter of the entire the material in the axial direction.

18. The rack manufacturing method of claim 16 wherein the ironing work is performed in at least the stage before performing the first plastic working, or after performing the first plastic working and before performing the second plastic working, to reduce the outer diameter of a portion in the axial direction of the material nearer the base end side than a portion corresponding to where the rack teeth will be formed.

19. The rack manufacturing method of claim 16 wherein the ironing work is performed before performing the first plastic working, to reduce the outer diameter of at least a portion corresponding to where the rack teeth will be formed on the part in the axial direction of the material.

20. The rack manufacturing method of claim 16 wherein the ironing work is performed before performing the first plastic working, to reduce the outer diameter of a portion of the part in the axial direction of the material except for the portion nearer to the tip end side than the portion corresponding to where the rack teeth will be formed.
